# EUROPEAN PATENT SPECIFICATION

(11) **EP 3 504 933 B1**
(45) Date of publication and mention of the grant of the patent: **24.05.2023**
(21) Application number: 17758921.5
(22) Date of filing: 24.08.2017
(51) Int. Cl.: H04W 92/02

(54) **INTERWORKING BETWEEN TETRA AND MCPTT SYSTEMS DURING END-TO-END ENCRYPTED SPEECH CALLS.**
ZUSAMMENARBEIT ZWISCHEN TETRA- UND MCPPT-SYSTEMEN BEI SPRACHANRUFEN MIT ENDE-ZU-ENDE-VERSCHLÜSSELUNG
INTERFONCTIONNEMENT ENTRE SYSTÈMES TETRA ET MCPTT PENDANT DES APPELS VOCAUX CHIFFRÉS DE BOUT EN BOUT

(30) Priority: 26.08.2016 GB 201614560
(43) Date of publication of application: 03.07.2019
(73) Proprietor: SEPURA LIMITED, Cambridge CB25 9TL (GB)
(72) Inventor: RAYNE, Mark W., Cambridge CB25 9TL (GB); KILGOUR, Christopher E. J., Cambridge CB25 9TL (GB)
(74) Representative: Dehns
(86) International application number: PCT/GB2017/052493
(87) International publication number: WO 2018/037235

(56) References cited:
- EP-A2- 1 437 910
- EP-B1- 2 243 332
- WO-A1-2012/064495
- HARRIS CORPORATION: "IWF end to end payload encryption key issue", 3GPP DRAFT; S6-160859 IWF END TO END PAYLOAD ENCRYPTION KEY ISSUE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. SA WG6, no. Tenerife, Spain; 20160725 - 20160729 30 July 2016 (2016-07-30), XP051139902, Retrieved from the Internet: URL:http://www.3gpp.org/ftp/tsg_sa/WG6_Mis sionCritical/TSGS6_012_Tenerife_SantaCruz/ Docs/ [retrieved on 2016-07-30]
- SEPURA PLC ET AL: "pCR on TR 23.782 concerning end-to-end encrypted TETRA speech", 3GPP DRAFT; S6-170381_WAS_S6-170219_PCR_ON_TETRA_SPEEC H_INTERWORKING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. SA WG6, no. Dali, China; 20170403 - 20170407 10 April 2017 (2017-04-10), XP051259417, Retrieved from the Internet: URL:http://www.3gpp.org/ftp/tsg_sa/WG6_Mis sionCritical/TSGS6_016_Dali/Docs/ [retrieved on 2017-04-10]
- SALKINTZIS A K: "EVOLVING PUBLIC SAFETY COMMUNICATION SYSTEMS BY INTEGRATING WLAN AND TETRA NETWORKS", IEEE COMMUNICATIONS MAGAZINE, IEEE SERVICE CENTER, PISCATAWAY, US, vol. 44, no. 1, 1 January 2006 (2006-01-01), pages 38-46, XP001238784, ISSN: 0163-6804, DOI: 10.1109/MCOM.2006.1580931

## Description

The present invention relates to mobile communications systems, and in particular to methods for end-to-end encryption in digital mobile radio communications systems. The invention is defined by the set of the appended claims.

Many mobile communications systems support end-to-end encryption of transmissions. This allows transmissions to be encrypted all the way from the sender to the recipient, e.g. so that the users need not rely on the security of the system's air interface encryption nor its fixed infrastructure.

For example, the TETRA (TErrestrial Trunked Radio) system supports end-to-end encryption, in which encryption synchronisation information (in the form of one or more "synchronisation frames") is transmitted by the sender together with encrypted speech frames, and is used by the receiver together with an encryption key to decode the encrypted speech frames. The receiver cannot decrypt the encrypted speech frames until it receives at least one synchronisation frame.

The TETRA system uses a frame stealing technique in order to provide sufficient air interface bandwidth to transmit the encryption synchronisation information (synchronisation frames), whereby speech frames may be "stolen" by synchronisation frames. However, stealing can degrade the quality of the transmitted speech.

Other mobile communications systems, such as the Long Term Evolution (LTE) system, also support end-to-end encryption, but may have sufficient air interface bandwidth such that it is not necessary to use stealing techniques.

It is becoming increasingly desirable for various different mobile communications systems to be able to interwork with one another. For example, the Third Generation Partnership Program (3GPP)'s "Mission Critical Push-to-Talk" (MCPTT) protocol requires interworking between TETRA mobile stations and LTE (MCPTT) mobile stations.

In order to facilitate this, a translation function is provided, e.g. in the system infrastructure, in order to translate or "transcode" between the different signalling protocols and formats used by the different communications systems. However, in order to transcode encrypted communications from one format to another, it would be necessary to decode the encrypted communications from one format, and to then re-encode the communications using the other format. This would require that the system infrastructure has access to the encryption key, and would not therefore be compatible with end-to-end encryption.

EP 2 243 332 A1 discloses transmission of TETRA data packets containing TETRA encoded speech with sync information. The system infrastructure and especially SwMI does the transcoding if needed, replaces missing speech frames, choose between sync or speech frames and ensure the right order delivery of speech frames. The TETRA packet includes a SN and two stealing flags and can be used in TETRA system or other networks.

EP 1 437 910 A2 discloses synchronisation optimization in a TETRA system during handoff: the base station informs the SWMI vocoder and then two streams of data are created one(speech and sync) purposes. During handoff the target base station transmits only the sync stream until it receives a message handoff successful and then transmits the second stream (speech frames).

XP051139902, HARRIS CORPORATION: "IWF end to end payload encryption key issue", 3GPP DRAFT; S6-160859 vol. SA WG6, no. Tenerife, Spain; 20160725 - 20160729 30 July 2016, addresses end to end payload encryption issue between MCPTT and LMR systems such as TETRA. It is required to transmit in band sync vectors during a call.

WO 2012/064495 A1 discloses a TETRA terminal or BS can send speech and encryption synchronisation data in the same time slot, when the BS allocate more bandwidth.

The Applicants believe that there remains scope for improvements to mobile communications systems.

According to a first aspect of the present invention, there is provided a method of operating a communications system as claimed in claim 1.

According to a second aspect of the present invention, there is provided a communications system as claimed in claim 8.

The present invention facilitates end-to-end encryption between a communications station, which may be a non-TETRA communications station such as a Mission Critical Push-to-Talk (MCPTT), e.g. LTE, communications station, and one or more TETRA communications stations. This is achieved in the present invention by configuring the (e.g. LTE) communications station to generate encrypted speech frames and one or more encryption synchronisation frames for transmission, e.g. in accordance with the TETRA end-to-end encryption protocol. In this way, the communications system can perform end-to-end encrypted transmissions where the system infrastructure does not have access to the encryption key, nor knowledge of the content of the speech frames.

Moreover, in the present invention, rather than having the communications station replace encrypted speech frames with encryption synchronisation frames (i.e. perform "stealing") (as would be done by a TETRA communications station when sending end-to-end encrypted transmissions to another TETRA communications station), the (e.g. LTE) communications station of the present invention is instead configured to associate each of the generated encryption synchronisation frames with one or more (e.g. two (a pair of)) corresponding encrypted speech frames, and to then transmit both the encrypted speech frames and the one or more associated encryption synchronisation frames to the system infrastructure of the communications system, e.g. for onward transmission to one or more intended recipients that may include at least one TETRA communications station.

The system infrastructure then operates to replace one or more of the encrypted speech frames with a corresponding encryption synchronisation frame so as to produce a modified set of frames, i.e. to perform the "stealing" function that would normally be performed by a transmitting TETRA communications station, and to transmit the modified set of frames to one or more TETRA communications stations.

In this way, the modified set of frames that is transmitted to the one or more TETRA communications stations will be (and in a preferred embodiment is) in a form suitable for transmission over the TETRA air interface, e.g. will require sufficiently little bandwidth, and will be suitable for receipt (and decoding) by the receiving TETRA communications station(s).

However, the set of frames transmitted by the (e.g. LTE) communications station to the system infrastructure will include all of the generated encrypted speech frames, and all of the generated encryption synchronisation frames. This set of frames may be transmitted by the system infrastructure in a substantially unmodified form to one or more other (e.g. LTE) communications stations, i.e. without performing stealing, and so without degrading the speech quality for the other (e.g. LTE) communications stations.

It will accordingly be appreciated that the present invention facilitates end-to-end encrypted communications between a (non-TETRA, e.g. LTE) communications station and one or more TETRA communications stations, while also facilitating end-to-end encrypted communications between the communications station and one or more other (non-TETRA, e.g. LTE) communications stations, without the one or more other communications stations suffering from quality degradation due to stolen speech frames.

It will be appreciated therefore, that the present invention provides an improved mobile communications system.

The present invention also extends to the operation solely of the communications station transmitting a set of frames in the manner of the present invention.

Thus, according to a third aspect of the present invention, there is provided a method of operating a communications station of a communications system as claimed in claim 2.

According to a fourth aspect of the present invention, there is provided a communications station as claimed in claim 9.

The present invention similarly extends to the operation of the system infrastructure modifying a received set of frames in the manner of the present invention.

Thus, according to a fifth aspect of the present invention, there is provided a method of operating system infrastructure of a communications system as claimed in claim 3.

According to a sixth aspect of the present invention, there is provided system infrastructure of a communications system as claimed in claim 10.

The present invention is preferably implemented in a communications system comprising two (or more) interworking communications systems.

One of the two (or more) interworking communications systems should be (and preferably is) a TETRA communications system. The other of the communications systems may be any suitable and desired communications system (other than a TETRA communications system (a non-TETRA communications system)), such as a GSM communications system, a UMTS communications system or an LTE (3GPP) communications system.

In a preferred embodiment, the communications system of the present invention comprises an interworking TETRA communications system and LTE (3GPP) communications system.

The communications system of the present invention preferably comprises appropriate system infrastructure, including for example, all of the necessary system infrastructure for each of the two (or more) interworking communications systems, together with one or more communications stations.

Thus, for example, the TETRA communications system may comprise any one or more or each of: a TETRA gateway, a TETRA inter-system interface (ISI), a TETRA Switching and Management Infrastructure (SwMI), one or more TETRA base stations, and the one or more TETRA communications stations of the present invention.

Correspondingly, each of the one or more TETRA communications stations of the present invention is preferably part of the TETRA communications system.

Each of the one or more TETRA communications stations of the present invention may be any suitable such TETRA station or communications terminal, such as a mobile station (e.g. radio unit) or a suitable fixed terminal, such as a dispatcher terminal.

Each of the one or more TETRA communications stations and/or the TETRA system infrastructure (e.g. base station(s)) is preferably operable to send and receive transmissions using (compatible with) the TETRA air interface.

Each of the one or more TETRA communications stations and/or the TETRA system infrastructure (e.g. base station(s)) is preferably operable to send and receive transmissions using a suitable TETRA speech codec, such as, for example, the TETRA Algebraic Code-Excited Linear Prediction (ACELP) codec.

Correspondingly, the other (e.g. LTE) communications system may comprise any one or more or each of: a (e.g. LTE) communications network, one or more (e.g. LTE) base stations, the (e.g. LTE) communications station of the present invention, and one or more other (e.g. LTE) communications stations.

The (non-TETRA, e.g. LTE) communications station of the present invention is preferably part of the other (non-TETRA, e.g. LTE) communications system of the two (or more) interworking communications systems.

The (e.g. LTE) communications station of the present invention (and preferably each of the one or more other communications stations) may be any suitable such station or communications terminal, such as a mobile station (e.g. radio unit) or a suitable fixed terminal, such as a dispatcher terminal.

Each of the (non-TETRA, e.g. LTE) communications stations and/or the (non-TETRA, e.g. LTE) system infrastructure (e.g. base station(s)) is preferably operable to send and receive transmissions using (compatible with) the (non-TETRA, e.g. LTE) communications system's air interface.

Each of the (e.g. LTE) communications stations and/or the (e.g. LTE) system infrastructure (e.g. base station(s)) is preferably operable to send and receive transmissions using a suitable speech codec. For example, where the other communications system comprises an LTE (3GPP) communications system, then the communications stations and/or the system infrastructure may use the Adaptive Multi-Rate WideBand (AMR-WB) codec, the Enhanced Voice Services Super-WideBand (EVS SWB) codec, or otherwise.

In a preferred embodiment, each of the (e.g. LTE) communications stations and/or the (e.g. LTE) system infrastructure (e.g. base station(s)) is preferably operable to send and receive transmissions in the form of data packets, e.g. Real-time Transport Protocol (RTP) data packets.

Each of the LTE communications stations is preferably operable to send and receive transmissions via an LTE (3GPP) network. However, it would also be possible for transmissions to be sent and received via another network, such as via the Internet.

The two (or more) interworking communications systems may be configured for interworking in any suitable manner. Preferably, an interworking function (IWF) is provided, e.g. as part of the system infrastructure of the overall communications system, that is configured to allow interchange of signalling and media between the two (or more) interworking communications systems.

In a preferred embodiment, the communications system of the present invention (and preferably the interworking function (IWF)) is configured such that the (e.g. LTE) communications station of the present invention (and preferably each of the one or more other (e.g. LTE) communications stations) is able to make an individual call to (i.e. is able to send speech transmissions to) any one of the one or more other (e.g. LTE) communications stations and to any one of the one or more TETRA communications stations (i.e. via the system infrastructure). The communications system of the present invention is preferably also configured such that the (e.g. LTE) communications station of the present invention (and preferably each of the one or more other (e.g. LTE) communications stations) is able to make a group call to (i.e. is able to send speech transmissions to) any two or more of the one or more other (e.g. LTE) communications stations and the one or more TETRA communications stations (i.e. via the system infrastructure).

Correspondingly, in a preferred embodiment, the communications system of the present invention is configured such that each of the one or more TETRA communications stations is able to make an individual call to (i.e. is able to send speech transmissions to) any one of the (e.g. LTE) communications station of the present invention, the one or more other (e.g. LTE) communications stations, and one or more other of the one or more TETRA communications stations (i.e. via the system infrastructure). The communications system of the present invention is preferably also configured such that each of the one or more TETRA communications stations is able to make a group call to (i.e. is able to send speech transmissions to) any two or more of the (e.g. LTE) communications station of the present invention, the one or more other (e.g. LTE) communications stations, and one or more other of the one or more TETRA communications stations (i.e. via the system infrastructure).

The communications system of the present invention preferably also comprises a Mission Critical Push-to-Talk (MCPTT) server, e.g. which may be configured to facilitate Mission Critical Push-to-Talk communications between the various communications stations of the communications system of the present invention. The MCPTT server may be part of the other (e.g. LTE) communications system infrastructure, or otherwise.

Where a (e.g. MCPTT) call that does not use end-to-end encryption is made (where speech transmissions are sent) between a TETRA communications station and a communications station of the other (e.g. LTE) communications system (or vice versa), then the system infrastructure preferably performs appropriate translation (or "transcoding") between the different signalling protocols and formats (speech codecs) used by the different communications systems. For example, the interworking function (IWF), TETRA gateway, or the TETRA SwMI may be configured to perform the appropriate translation.

However, as discussed above, where a (e.g. MCPTT) call that does use end-to-end encryption is made (where end-to-end encrypted speech transmissions are sent) between a TETRA communications station and a communications station of the other (e.g. LTE) communications system (or vice versa), then it would not be possible or appropriate for the system infrastructure to translate between the different signalling protocols and formats (speech codecs) used by the different communications systems. Therefore, in this case, it is necessary for the communications stations of the different interworking communications systems to use the same signalling protocols and formats (the same speech codec).

In this regard, the Applicants have recognised that where a (e.g. MCPTT) call that uses end-to-end encryption is made (where end-to-end encrypted speech transmissions are sent) between a TETRA communications station and a communications station of the other (e.g. LTE) communications system (or vice versa), a TETRA speech codec should be (and in a preferred embodiment is) used. This is because the codecs for use in the other (e.g. LTE) communications system, such as the AMR-WB and EVS SWB codecs, typically require too much radio bandwidth to be used in the TETRA system and/or may not be available in typical (existing) TETRA radio equipment.

In a particularly preferred embodiment of the present invention, end-to-end encrypted speech transmissions are sent between a TETRA communications station and a communications station of the other (e.g. LTE) communications system (or vice versa) using the TETRA ACELP codec.

Thus, for example, the (e.g. LTE) communications station of the present invention (and preferably each of the other (e.g. LTE) communications stations) is preferably configured to (preferably comprises a speech codec configured to) generate (a sequence of) speech frames from input speech, preferably using a TETRA speech codec, and preferably the TETRA ACELP codec.

Thus, in a preferred embodiment, the (non-TETRA, e.g. LTE) communications station of the present invention is operable to selectively generate (a sequence of) speech frames from input speech using one of a (e.g. "native") non-TETRA, e.g. LTE, speech codec (as described above), and a TETRA speech codec. The communications station of the present invention may be operable to use the TETRA speech codec for transmissions when end-to-end encrypted speech transmissions are sent to one or more TETRA communications stations, but may otherwise be operable to use the (e.g. "native") non-TETRA, e.g. LTE, speech codec for transmissions.

In a preferred embodiment, the (e.g. speech codec of the) communications station may produce, for one or more or each generated speech frame, importance information, i.e. information indicating the effect that would be done to the speech quality by deletion of the speech frame(s). Such information may be produced for each generated speech frame, or for each group of plural (e.g. each pair of) speech frames. As will be described further below, this information may be used to determine which of the encrypted speech frames should be replaced with a corresponding synchronisation frame, e.g. so as to reduce or minimise the degradation to the speech quality caused by the replacing (stealing) operation.

The Applicants have similarly recognised that where a (e.g. MCPTT) call that uses end-to-end encryption is made (where end-to-end encrypted speech transmissions are sent) between a TETRA communications station and a communications station of the other (e.g. LTE) communications system (or vice versa), the communications stations of the different interworking communications systems should (and preferably do) use the same, and preferably a TETRA, end-to-end encryption scheme.

Thus, in a particularly preferred embodiment of the present invention, end-to-end encrypted speech transmissions are sent between a TETRA communications station and a communications station of the other (e.g. LTE) communications system (or vice versa) using the TETRA end-to-end encryption scheme.

Thus, for example, the (e.g. LTE) communications station of the present invention is preferably configured to (and preferably comprises an encryption stage (processing circuitry) configured to) generate the encrypted speech frames and the one or more encryption synchronisation frames from the (sequence of) speech frames generated by the speech codec (and preferably each of the TETRA communications stations and preferably one or more or each of the other (e.g. LTE) communications stations are configured in this way).

The (encryption stage of the) (or each) communications station preferably generates encryption synchronisation information (i.e. in the form of each of the one or more encryption synchronisation frames) as a by-product of encrypting one or more speech frames. The encryption synchronisation information (i.e. each encryption synchronisation frame) is preferably for use in decrypting (and is preferably used to decrypt) one or more (e.g. two) different speech frames in the sequence of speech frames to the speech frame from which the information was generated. Most preferably, the encryption synchronisation information (i.e. each encryption synchronisation frame) is for use in decrypting (and is preferably used to decrypt) the next (following) one or more (e.g. two) speech frames in the sequence of speech frames.

Accordingly, the encrypted speech frames preferably comprise a (e.g. contiguous) sequence of encrypted speech frames, where each of the one or more encryption synchronisation frames is preferably an encryption synchronisation frame that corresponds to one or more (e.g. two) of the encrypted speech frames.

In one embodiment, one or more or each of the one or more encryption synchronisation frames is an encryption synchronisation frame generated due to the encryption of one or more (e.g. two) corresponding encrypted speech frames. That is, an or each encrypted speech frame that corresponds to an encryption synchronisation frame is preferably an encrypted speech frame from which the encryption synchronisation frame was generated.

In another embodiment, one or more or each of the one or more encryption synchronisation frames is an encryption synchronisation frame generated for decryption of one or more (e.g. two) corresponding encrypted speech frames. That is, an or each encrypted speech frame that corresponds to an encryption synchronisation frame is preferably an encrypted speech frame for which the encryption synchronisation frame is to be used to decrypt.

In a preferred embodiment, where end-to-end encrypted speech transmissions are sent from a TETRA communications station, the TETRA communications station replaces encrypted speech frames with encryption synchronisation frames, i.e. performs "stealing", as appropriate, and then transmits a modified set of frames (i.e. a sequence of frames where one or more of the encrypted speech frames are replaced with one or more synchronisation frames).

However, as discussed above, in the present invention, where end-to-end encrypted speech transmissions are sent from the (e.g. LTE) communications station (and preferably from any one of the other (e.g. LTE) communications stations), rather than having the communications station replace encrypted speech frames with encryption synchronisation frames (i.e. perform "stealing"), the (e.g. LTE) communications station is configured to associate each generated encryption synchronisation frame with one or more corresponding encrypted speech frames (e.g. a corresponding encrypted speech frame or pair of encrypted speech frames) of the encrypted speech frames, and to then transmit both the encrypted speech frames and the one or more associated encryption synchronisation frames, e.g. to the system infrastructure of the communications system preferably for onward transmission to one or more intended recipients.

Thus, the set of frames transmitted by the communications station of the present invention (and received by the system infrastructure) should (and preferably does) comprise a contiguous sequence of encrypted speech frames, and one or more encryption synchronisation frames that each correspond to one or more (e.g. two) of the encrypted speech frames in the contiguous sequence of encrypted speech frames.

Correspondingly, for each encryption synchronisation frame that is transmitted by the (non-TETRA, e.g. LTE) communications station (and received by the system infrastructure) the corresponding encrypted speech frame or frames (i.e. both the encrypted speech frame or frames from which the encryption synchronisation frame was generated and the encrypted speech frame or frames for which the encryption synchronisation frame is to be used to decrypt) should be (and are preferably) also transmitted by the (non-TETRA, e.g. LTE) communications station (and received by the system infrastructure), i.e. without "stealing" (removing) any of the encrypted speech frames.

In the present invention, each of the encryption synchronisation frames may be associated with one or more corresponding encrypted speech frames of the set of speech frames in any suitable manner.

In one preferred embodiment, one or each of the generated encryption synchronisation frames is associated with a corresponding encrypted speech frame (or frames) by placing the encryption synchronisation frame in a predetermined position (i.e. relative to the encrypted speech frame(s)) in the set (e.g. sequence) of frames to be transmitted. For example, an encryption synchronisation frame may be placed immediately adjacent to (before or after) a corresponding encrypted speech frame (or frames) in the set (sequence) of frames to be transmitted. Other predetermined positions relative to the corresponding encrypted speech frame or frames would be possible.

Where, as discussed above, the communications station and/or the communications system is configured to send transmissions in the form of data packets, then one or each of the generated encryption synchronisation frames may be associated with a corresponding encrypted speech frame (or frames) by placing the data packet containing the encryption synchronisation frame in a predetermined position in the sequence of data packets to be transmitted relative to the data packet containing the encrypted speech frame(s).

For example, a data packet containing an encryption synchronisation frame may be placed immediately adjacent to (before or after) a data packet containing a corresponding encrypted speech frame (or frames) in the sequence of data packets to be transmitted. Other predetermined data packet positions would be possible.

Thus, in a preferred embodiment, each of the one or more encryption synchronisation frames is associated with one or more corresponding encrypted speech frames by placing the encryption synchronisation frame in a predetermined position in the set of frames to be transmitted relative to the corresponding encrypted speech frame or frames. This represents a particularly convenient and straightforward technique to associate encryption synchronisation frames with corresponding encrypted speech frames.

In a preferred embodiment, one or more sequence numbers may be provided for, and e.g. associated with or included in, each frame (or pair of frames) in order to associate (link) each of the generated encryption synchronisation frames with one or more corresponding encrypted speech frames.

For example, where, as discussed above, the communications station and/or the communications system is configured to send transmissions in the form of data packets, each data packet may (and preferably does) include a sequence number (e.g. an RTP (16 bit) sequence number), e.g. for use in determining the data packet's position in the sequence of data packets. In this case, the RTP sequence number may be used to associate each of the generated encryption synchronisation frames with a corresponding encrypted speech frame (or frames).

The data packet sequence numbers will (and preferably do) number both the speech frame data packets and the interspersed synchronisation frame data packets.

Therefore, once one or more of the speech frame data packets has been (deleted and) replaced with a corresponding synchronisation frame data packet, the series of data packet sequence numbers will become discontinuous. However, a discontinuity in the series of data packet sequence numbers may also be caused by one or more of the data packets failing to reach its intended destination.

Accordingly, in a preferred embodiment, the (system infrastructure of the) communications system is configured to be able to distinguish between discontinuities in the series of data packet sequence numbers that are caused by the replacing (stealing) operation of the present invention, and those that are caused by a data packet failing to reach its intended destination.

This may be done in any suitable manner. In one preferred embodiment, an additional sequence number is included in each speech frame data packet, and is used to define the position of the speech frame(s) in the sequence of speech frames. That is, an additional series of sequence numbers is provided that numbers only the speech frames, and that is independent of the synchronisation frames.

The or an additional sequence number may also be included in one or more or each of the synchronisation frame data packets. For example, for one or more or each of the synchronisation frame data packets, the (same) additional sequence number may be included in the data packet as is included in a corresponding speech frame data packet.

Thus, in a preferred embodiment each of the one or more encryption synchronisation frames is associated with one or more corresponding encrypted speech frames using one or more (e.g. frame and/or packet) sequence numbers. This again represents a particularly convenient and straightforward technique to associate encryption synchronisation frames with corresponding encrypted speech frames.

In a particularly preferred embodiment, each encryption synchronisation frame is associated with a corresponding encrypted speech frame (or frames) by including it in the same data packet as the corresponding encrypted speech frame (or frames). This then avoids the need to provide an additional sequence number, since the (e.g. RTP) data packet sequence number will effectively number the speech frames, independently of the synchronisation frames.

In these embodiments, each data packet may contain a marker to indicate whether or not the data packet contains a synchronisation frame (or frames).

Thus, in a preferred embodiment each of the one or more encryption synchronisation frames is associated with one or more corresponding encrypted speech frames by combining the encryption synchronisation frame with the corresponding encrypted speech frame or frames into a single data packet.

In these embodiments, where a (e.g. RTP) data packet contains more than one encrypted speech frame and/or more than one encryption synchronisation frame, a marker is preferably included in the data packet to indicate which of the encrypted speech frame(s) is associated with which of the encryption synchronisation frame(s). Such a marker may, for example, be included in one or more or each of the encryption synchronisation frame(s), and may indicate which of the encrypted speech frames the encryption synchronisation frame is associated with.

The marker may have any suitable form. For example, the marker may comprise a (sequence) number, e.g. that corresponds to the sequence order of the encrypted speech frame in the data packet, or number or name that corresponds to a number or name associated with one of the encrypted speech frames. Other arrangements would be possible.

It would be possible for the communications station to generate "just enough" synchronisation frames for correct operation of the one or more TETRA communications stations (and in one preferred embodiment, this is done).

Thus, for example, the communications station may be configured to generate at least four synchronisation frames in the first second of transmissions, and then at least one synchronisation frame per second thereafter. The later synchronisation frames may be provided in order to allow "late entering" communications stations or communications stations that change cell to decrypt the communications.

However, it would also be possible to generate more synchronisation frames than this. This can reduce any delay in the ability of late entering communications stations or communications stations that change cell from being able to decode the transmission properly.

Thus, in a preferred embodiment, the communications station is configured to generate more than four synchronisation frames in the first second of transmissions, and/or more than one synchronisation frame per second thereafter.

In one preferred such embodiment, the communications station may be configured to generate synchronisation frames in dependence on the importance information (e.g. generated by the speech codec). For example, the communications station may be configured to generate a synchronisation frame in respect of some or each "low importance" speech frame (or pair of frames).

Thus, in a preferred embodiment, the (e.g. speech codec of the) communications station is configured to produce, for one or more or each generated speech frame, importance information, i.e. information indicating the effect that would be done to the speech quality by deletion of the speech frame(s). The communications station is preferably also configured to use the importance information for each frame or group (e.g. pair) of frames to determine whether (or not) a synchronisation frame should be produced for that frame or group (e.g. pair) of frames.

Where it is determined that a synchronisation frame should be produced (e.g. where the importance information indicates that deletion of the frame or frames would have relatively little effect of the speech quality), then a synchronisation frame is preferably produced, and where it is determined that a synchronisation frame should not be (should other than be) produced (e.g. where the importance information indicates that deletion of the frame or frames would have a relatively large effect of the speech quality), then a synchronisation frame is preferably not (is other than) produced).

In another preferred embodiment, the communications station may be configured to generate a synchronisation frame in respect of each (and every) speech frame (or pair of frames).

As described above, in the present invention, the communications station transmits a set of frames comprising both the encrypted speech frames and the one or more associated encryption synchronisation frames to the system infrastructure of the communications system, e.g. for onward transmission to one or more intended recipients.

The communications station should (and preferably does) transmit the set of frames to the system infrastructure using (in a form compatible with) the air interface of the other (non-TETRA, e.g. LTE) communications system. The communications station preferably transmits the set of frames to the system infrastructure as a (logically connected, e.g. contiguous) sequence of frames, e.g. using a single channel of the other (non-TETRA, e.g. LTE) communications system. Other arrangements would be possible.

Correspondingly, the system infrastructure of the communications system receives the set of frames.

The system infrastructure then operates to replace one or more of the encrypted speech frames with a corresponding encryption synchronisation frame so as to produce a modified set of frames.

Any suitable element of the system infrastructure of the communications system may be configured to perform this operation, e.g. such as any suitable element of the system infrastructure of each of the two (or more) interworking communications systems. In a preferred embodiment, the interworking function (IWF), the TETRA gateway, or the TETRA SwMI may be configured to perform this operation.

The system infrastructure may replace an encrypted speech frame with a corresponding encryption synchronisation frame in any suitable and desired manner. However, this is preferably done in accordance with the TETRA end-to-end encryption scheme, i.e. so that the resulting modified set of frames is compatible with the TETRA air interface, and the one or more receiving TETRA communications stations.

Thus, in a preferred embodiment, one or each synchronisation frame is used to replace an encrypted speech frame from which it was generated.

In one preferred embodiment, the system infrastructure follows some pre-determined, preferably fixed, rule or set of rules in respect of the replacing operation.

Thus, for example, the system infrastructure may be operable to replace each speech frame for which a corresponding synchronisation frame is received. In this embodiment, the communications station that generates the encrypted speech frames and the one or more encryption synchronisation frames for transmission may do so in accordance with the TETRA stealing rules (i.e. at least four synchronisation frames in the first second of the transmission, and then at least one synchronisation frame per second thereafter), or otherwise.

In another preferred embodiment, e.g. where the communications station is configured to generate more encryption synchronisation frames for transmission than are to be used to replace speech frames, the system infrastructure may be configured to replace (steal) a more limited number of speech frames, e.g. according to some pre-determined, preferably fixed, rule or set of rules. For example, where more encryption synchronisation frames are received than are to be used to replace speech frames, the system infrastructure may place some upper limit (e.g. a maximum of four synchronisation frames in the first second of the transmission, and then a maximum of one synchronisation frame per second thereafter, or otherwise) on the number of speech frames that are replaced by corresponding synchronisation frames.

The communications station is configured to indicate to (e.g. to instruct) the system infrastructure which one or more of the encrypted speech frames should be replaced with a corresponding encryption synchronisation frame. The information preferably corresponds to (e.g. is based on) the importance information, e.g. that is generated by the speech codec (as described above).

This may be achieved in any suitable manner. In a preferred embodiment, one or more indicators are included in the transmissions generated by the communications station to indicate which one or more of the encrypted speech frames should be replaced with a corresponding encryption synchronisation frame.

Thus, the communications station is configured to transmit (and the system infrastructure is configured to receive) information indicating which one or more of the transmitted encrypted speech frames should be replaced with a corresponding encryption synchronisation frame.

Correspondingly, the system infrastructure is configured to use the indication to determine which of one or more received encrypted speech frames should be replaced with a corresponding received encryption synchronisation frame. Where it is determined that an encrypted speech frame should be replaced with a corresponding encryption synchronisation frame, then the system infrastructure replaces the encrypted speech frame with the corresponding encryption synchronisation frame (and e.g. discards the encrypted speech frame). Where it is determined that an encrypted speech frame should not be (should other than be) replaced with a corresponding encryption synchronisation frame, then the system infrastructure preferably does not replace (other than replaces) the encrypted speech frame with the corresponding encryption synchronisation frame (and e.g. discards the encryption synchronisation frame).

The information indicating which one or more of the transmitted encrypted speech frames should be replaced with a corresponding encryption synchronisation frame may take any suitable form.

For example, the communications station may transmit the importance information (or information indicating the importance information) for one or more or each encrypted speech frame, and the system infrastructure may be operable to determine, on the basis of the importance information, which of the encrypted speech frames should be replaced with a corresponding synchronisation frame.

In this case, where the importance information indicates that deletion of the frame or frames would have relatively little effect of the speech quality, then the system infrastructure preferably replaces the encrypted speech frame with the corresponding encryption synchronisation frame (and e.g. discards the encrypted speech frame), and where the importance information indicates that deletion of the frame or frames would have a relatively large effect of the speech quality, then the system infrastructure preferably does not replace (other than replaces) the encrypted speech frame with the corresponding encryption synchronisation frame (and e.g. discards the encryption synchronisation frame).

In a more preferred embodiment, the communications station is configured to transmit information that (directly) indicates which of the encrypted speech frames should be replaced with a corresponding synchronisation frame. This may take the form, for example, of information that may be included with each encrypted speech frame (e.g. a flag), preferably where the information indicates whether or not the particular encrypted speech frame should be replaced with a corresponding synchronisation frame. This then simplifies the processing that is required to be performed by the system infrastructure, and also reduces the information that is potentially available to an adversary attempting to intercept and decode the encrypted transmissions.

Thus, in a preferred embodiment, the communications station is configured to transmit (and the system infrastructure is configured to receive) information associated with one or more or each encrypted speech frame (or pair of frames) that indicates (directly) either that the associated encrypted speech frame (or frames) should be replaced with a corresponding encryption synchronisation frame, or that the associated encrypted speech frame (or frames) should not be (should other than be) replaced with a corresponding encryption synchronisation frame. The system infrastructure is correspondingly preferably configured to replace an encrypted speech frame (or frames) with a corresponding encryption synchronisation frame when the received information indicates that the associated encrypted speech frame (or frames) should be replaced with a corresponding encryption synchronisation frame.

In these embodiments, the communications station may be configured to use the importance information for each encrypted speech frame or group (e.g. pair) of frames to determine whether (or not) the encrypted speech frame or frames should be replaced with a corresponding encryption synchronisation frame.

Where the importance information indicates that deletion of the frame or frames would have relatively little effect of the speech quality, then the communications station preferably associates information with the encrypted speech frame (or pair of frames) that indicates (directly) that the associated encrypted speech frame (or frames) should be replaced with a corresponding encryption synchronisation frame. Where the importance information indicates that deletion of the frame or frames would have a relatively large effect of the speech quality, then the communications station preferably either does not associate (other than associates) such information with the encrypted speech frame (or pair of frames), or associates information with the encrypted speech frame (or pair of frames) that indicates (directly) that the associated encrypted speech frame (or frames) should not be (should other than be) replaced with a corresponding encryption synchronisation frame.

It would also be possible to combine the above methods (and in a preferred embodiment this is done).

Thus, for example, in a preferred embodiment, the system infrastructure is configured to replace speech frames in accordance with the TETRA stealing rules, i.e. at least four synchronisation frames in the first second of the transmission, and then at least one synchronisation frame per second thereafter, and also to replace an encrypted speech frame with a corresponding encryption synchronisation frame on the basis of an indication received from the communications station, e.g. in the manner described above.

In this case, the system infrastructure may use the TETRA stealing rules, i.e., to steal four synchronisation frames in the first second of the transmission and then one synchronisation frame per second thereafter, even if the communications station generates less stealing indications than are in accordance with the TETRA stealing rules (i.e. less than four in the first second of the transmission and/or less than one per second thereafter). That is, the system infrastructure may place some lower limit (e.g. a minimum of four synchronisation frames in the first second of the transmission, and then a minimum of one synchronisation frame per second thereafter, or otherwise) on the number of speech frames that are replaced by corresponding synchronisation frames. The system infrastructure may, e.g., comprise one or more timers (e.g. timing circuitry) to facilitate this.

Equally, in this case, when the system infrastructure receives an indication that indicates that an associated encrypted speech frame (or frames) should be replaced with a corresponding encryption synchronisation frame, then the system infrastructure may (immediately) replace the indicated encrypted speech frame (or frames) with the corresponding encryption synchronisation frame. The system infrastructure may then reset the one or more timers when this happens.

Thus, in a preferred embodiment, the system infrastructure is configured to replace an encrypted speech frame (or frames) with a corresponding encryption synchronisation frame when a received indication indicates that the associated encrypted speech frame (or frames) should be replaced with a corresponding encryption synchronisation frame, and also to ensure that sufficient encrypted speech frames, i.e. in accordance with the TETRA stealing rules (e.g. at least four synchronisation frames in the first second of the transmission, and then at least one synchronisation frame per second thereafter), are replaced with corresponding encryption synchronisation frames (e.g. when the communications station generates less stealing indications than are in accordance with the TETRA stealing rules (i.e. less than four in the first second of the transmission and/or less than one per second thereafter)).

This will allow the system infrastructure to produce appropriately modified sets of frames for transmission to the one or more TETRA communications stations, both where the original set of frames is produced by a communications station that is configured to generate stealing indications and where the original set of frames is produced by a communications station that is not configured to generate (i.e. that does not support) stealing indications.

Correspondingly, in these embodiments, the system infrastructure may place some upper limit (e.g. a maximum of four synchronisation frames per second, or otherwise) on the number of speech frames that are replaced by corresponding synchronisation frames (even if the communications station generates more stealing indications than this).

Thus, in a preferred embodiment, the system infrastructure is configured to ensure that a maximum number of synchronisation frames (e.g. at most four synchronisation frames per second) are replaced with corresponding encryption synchronisation frames (e.g. when the communications station generates more stealing indications than are required).

The modified set of frames, e.g. comprising a sequence of encrypted speech frames and interspersed synchronisation frames, is then transmitted to one or more TETRA communications stations.

This may be done as appropriate, e.g. via the TETRA gateway, the TETRA Switching and Management Infrastructure (SwMI), and/or the one or more TETRA base stations, etc.

In a particularly preferred embodiment, the (unmodified) set of frames is also transmitted to one or more other communications stations, such as one or more other (e.g. LTE) communications stations of the other (e.g. LTE) communications system.

In this case, each of the one or more other communications stations may receive the set of frames, and may decode the encrypted speech frames appropriately, e.g. using the synchronisation frame(s). Since the one or more other (e.g. LTE) communications stations receive the unmodified set of frames, the speech quality will not be degraded due to the stealing technique that is used in TETRA.

In addition, by increasing the number of synchronisation frames included in the set of frames, e.g. so as to be more than is required by the TETRA stealing technique (i.e. more than four synchronisation frames in the first second of transmissions, and/or more than one synchronisation frame per second thereafter), the encryption synchronisation delay for communications stations of the one or more other (e.g. LTE) communications stations that enter the call late, or that change cell, can be decreased, thereby further improving the speech quality.

The communications system of the present invention may (always) be operated in a single, preferably fixed, mode of operation, or may be configured to be switched between plural different modes of operation. In this latter case, it may be necessary for the communications station system to indicate to the system infrastructure which of the modes of operation the communications station is using (or vice versa).

This may be done in any suitable manner. In one preferred embodiment, this is achieved by including in transmissions (e.g. in one or more or each of the data packets) data indicating the appropriate mode(s) of operation. Alternatively, the mode(s) of operation to be used may be agreed between the communications station and the system infrastructure prior to the speech transmission commencing, e.g. in a Session Description Protocol (SDP) Offer/Answer session, or similar.

As will be appreciated by those skilled in the art, all of the aspect and embodiments of the present invention can and preferably do include any one or more or all of the preferred and optional features of the invention described herein, as appropriate.

The methods in accordance with the present invention may be implemented at least partially using software e.g. computer programs. It will thus be seen that when viewed from further aspects the present invention provides computer software specifically adapted to carry out the methods hereinabove described when installed on data processing means, and a computer program element comprising computer software code portions for performing the methods hereinabove described when the program element is run on data processing means.

The invention also extends to a computer software carrier comprising such software which when used to operate a communications system and a communications station comprising data processing means causes in conjunction with said data processing means said system or station to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software and thus from a further broad aspect the present invention provides computer software and such software installed on a computer software carrier for carrying out at least one of the steps of the methods set out hereinabove.

A number of preferred embodiments of the present invention will now be described by way of example only and with reference to the accompanying drawings, in which:
Figure 1 shows schematically a communications system in accordance with an embodiment of the present invention;
Figure 2 shows schematically a communications station in accordance with an embodiment of the present invention;
Figure 3 shows schematically a method in accordance with an embodiment of the present invention;
Figure 4 shows schematically a method in accordance with an embodiment of the present invention; and
Figure 5 shows schematically a method in accordance with an embodiment of the present invention.

Preferred embodiments of the present invention are directed to techniques for end-to-end encryption synchronisation interworking.

The Third Generation Partnership Program (3GPP) is developing specifications for the use and enhancement of Long Term Evolution (LTE) radio access technology and System Architecture Evolution (SAE) equipment for use in Mission Critical systems. A number of requirements have been developed, including the ability of a Mission Critical LTE system to interwork with existing Mission Critical systems such as TETRA.

3GPP is specifying a new protocol for Mission Critical Push-to-Talk (MCPTT) that operates over 3GPP LTE networks. A 3GPP user equipment (UE) that wishes to make use of the MCPTT services possesses an "MCPTT client" that communicates with an "MCPTT server" connected via the LTE network (it might also or alternatively be connected via some other broadband network such as the Internet via WiFi or Ethernet and then through a Session Initiation Protocol (SIP) core network to reach the MCPTT server). Such MCPTT clients normally use the Adaptive Multi-Rate WideBand (AMR-WB) speech codec for voice calls.

Mission Critical Communications using Push-to-Talk typically use group communications in which the communications from one user, having been granted permission to talk, are sent to all the other members of the group, typically using multicast techniques where available. This makes efficient use of the available bandwidth because all other members of a group will receive the same, or very similar, media transmission.

The implementation of MCPTT in an LTE network can make use of the 3GPP Multimedia Broadcast and Multicast System (MBMS) in which the same media stream can be broadcast to all members that are required to receive it under the same cell, or group of cells. This mechanism uses a fixed amount of bandwidth in a cell, but potentially utilises more power in comparison with a targeted delivery to individual devices using unicast techniques. The more group subscribers receiving the same media in an area, the more beneficial it is to use broadcast and multicast techniques. Consequently the MCPTT server makes a decision, based on parameters including, but not limited to, reports of user location and the number of users in an area, as to whether it is appropriate to deliver the media to a group in a particular area by multicast techniques or by unicast techniques.

There is a requirement for TETRA radios to interwork with 3GPP MCPTT radios using end-to-end encryption. Interworking between MCPTT and TETRA is provided by means of an interworking function that allows interchange of signalling and media between the MCPTT server and a TETRA gateway. The TETRA gateway provides an interface between the MCPTT interworking function (IWF) and the TETRA inter-system interface (ISI) or TETRA Switching and Management Infrastructure (SwMI). Either the MCPTT interworking function or the TETRA gateway or TETRA SwMI may provide the necessary format conversions between MCPTT and TETRA.

In the case of end-to-end encrypted voice calls, TETRA uses a frame stealing mechanism in order to provide sufficient air interface bandwidth to transport encryption synchronisation information (termed here "synchronisation frames") to the TETRA receiver. The receiver cannot decrypt TETRA end-to-end voice encryption until it receives at least one end-to-end encryption synchronisation frame.

In TETRA, the encryption synchronisation information is a by-product of encrypting a speech frame, and is used (in conjunction with an encryption key) to initialise the encryption algorithm in preparation for encryption or decryption of the next speech frame. Thus, receipt of a synchronisation frame enables a receiver that possesses the encryption key to decrypt the next speech frame or next pair of speech frames encrypted by the transmitter of the encrypted speech.

In the TETRA air interface, the synchronisation frames replace the speech frames from which they were generated (i.e. a speech frame may be "stolen" by a synchronisation frame). A receiver of the call cannot decrypt any speech until it receives a synchronisation frame, but after that, each operation of the encryption algorithm to decrypt a speech frame generates the initialisation information for decrypting the next speech frame in the sequence of frames, whether or not the speech frame was actually received. This is known as "flywheel sync". However, if there is a discontinuity in the sequence of speech frames (e.g. following a cell change), the receiver may lose synchronisation with the encryption until the next synchronisation frame is received.

When a TETRA transmitter starts encrypting speech, it replaces the first encrypted speech frame with the resulting synchronisation information (formatted into a synchronisation frame) and transmits the synchronisation frame instead of the speech frame. This process is known as "stealing" or "frame stealing". To provide a high probability that receivers will be able to synchronise to the encrypted speech in the presence of propagation errors in the radio channel, the TETRA specification allows the transmitter to replace speech with synchronisation frames up to four times per second. In practise, some TETRA mobile stations steal four consecutive speech frames in the first second of transmission, others steal four dispersed speech frames during the first second of transmission. During the rest of the transmission, the mobile station should steal at least one speech frame per second during a group call, to allow late-comers to the call ("late entry") and mobile stations that have changed cell to synchronise to the encrypted speech without too much additional delay.

Stealing speech frames damages the quality of the received speech. Therefore, it is desirable to either minimise stealing or to find ways of stealing that minimise the damage to the speech quality. In TETRA, the speech codec may label each speech frame with an importance indication (e.g. low, medium or high), where the importance relates to the damage to the speech quality that would be caused by deletion of the speech frame. This allows the encryption device to selectively steal lower importance speech frames. Thus, the damage to the received speech can be significantly reduced if the encrypting mobile station (MS) preferentially steals only low importance speech frames. This also allows the encrypting radio to send synchronisation frames more frequently (e.g. up to four times per second) without causing significant damage to the quality of the received speech, e.g. so that late entry delays can also be reduced. (Note that the speech importance information is not transmitted over the air interface.)

TETRA speech frames and synchronisation frames are not numbered when transmitted over the TETRA air interface. Therefore, it is desirable that when encrypted TETRA speech is passed through a TETRA Switching and Management Infrastructure (SwMI) or between one SwMI and another SwMI, the sequence of speech frames and synchronisation frames does not get reordered and that no frames are inserted or lost. Otherwise, receiving radios will lose encryption synchronisation and start producing gibberish instead of speech. Also, the first and second-half slot ordering of speech frames needs to be preserved.

For example, according to the TETRA specification, "the destination SwMI of the call shall receive stolen frames from the source SwMI in such a sequence that it shall be able to correctly transmit these across the air interface, i.e. the exact relation between stolen frames and the first and second half slots of a timeslot shall be maintained. This implies that frame and timeslot boundaries, and ordering, shall be retained across the ISI for end-to-end encrypted calls."

However, speech frame stealing by encryption synchronisation frames is only necessary over the TETRA air interface.

As noted above, there is a requirement for interworking between MCPTT and other radio equipment networks, including TETRA. The interworking may be provided via a gateway or "Interworking Function" (IWF) between the MCPTT server and the other radio equipment networks.

When an MCPTT client wants to make a call that includes a TETRA MS, the call has to be routed through the IWF. If end-to-end encryption is not needed, the IWF (or its counterpart, if any, in the TETRA SwMI, gateway or ISI) may have to transcode the speech from the AMR-WB format to the TETRA codec format, and vice versa. On the other hand (e.g. if the tandem speech coding causes unacceptable speech quality degradation problems), it might be preferable for the MCPTT clients to use the TETRA speech codec for the duration of the call.

If end-to-end encryption is needed and the call is to be routed through the IWF, it is desirable for all participants in the call to use the TETRA speech codec. This is because the IWF, TETRA gateway and TETRA SwMI will not possess the encryption key for the speech, and so are not able to decrypt and transcode the speech. Thus, where there is a need to include TETRA MSs in an end-to-end encrypted call, it is desirable for all parties in the call, including the MCPTT clients, to use the TETRA speech codec, and to use the TETRA encryption mechanism and therefore provide synchronisation frames.

Preferred embodiments propose that a transmitting Mission Critical Push-to-Talk (MCPTT) client generates synchronisation frames, e.g. in a corresponding way to the way that a TETRA MS would, even though this is not required for transmission to other MCPTT clients.

The MCPTT client may generate up to four synchronisation frames in the first second of its transmission, and may generate late-entry synchronisation frames at the rate of one per second or faster, e.g. using speech-importance information from the codec to choose speech frames suitable for stealing.

However, in the present embodiment, the MCPTT client does not steal any speech frames. Instead, speech frames and linked synchronisation frames are sent as data packets to all MCPTT recipients of the call, and, if the call includes TETRA MSs, to the interworking function connecting the MCPTT system to the TETRA SwMI. The interworking function, TETRA gateway or TETRA SwMI deletes the speech frames linked to synchronisation frames, and the TETRA SwMI sends the ordered stream of speech frames and synchronisation frames to TETRA group members.

This allows TETRA MSs to experience the same encryption synchronisation performance from MCPTT clients as from other TETRA MSs.

The call setup process between the MCPTT system and interworking function or TETRA SwMI may be enhanced to allow for the operation according to the present embodiment.

When an MCPTT client decides to communicate with another MCPTT client using TETRA end-to-end encryption, there is no need to perform frame stealing. Indeed, frame stealing would cause unnecessary damage to the speech quality.

Therefore, some embodiments comprise attaching (or otherwise linking) to each encrypted speech frame or pair of speech frames a copy of the synchronisation frame needed to decrypt the attached or linked speech frame or pair of speech frames. In this case, every receiving MCPTT client can decrypt every speech frame or speech frame pair independently of any other speech frame or speech frame pair, independently of the order in which the speech frames are received, and with no need to implement a flywheel synchronisation mechanism. In addition, synchronisation after a late entry is instantaneous. (Note that this is in contrast with the TETRA standard where an encryption synchronisation frame provides the information needed to decrypt the next speech frame.)

More preferred embodiments comprise attaching (or otherwise linking) the encryption synchronisation frame to the speech frame or the pair of speech frames that generated the encryption synchronisation frame. The synchronisation frame would then apply to the next speech frame or the first of the next pair of speech frames.

Thus, for example, speech frames A, B, C, and D may be encrypted and transmitted. Speech frames A and B may be sent in TDMA slot X and speech frames C and D may be sent in TDMA slot Y.

In a first embodiment, encryption of speech frame A creates synchronisation frame Sₐ. The sequence of transmissions might then be A, Sₐ, B, C, D, where Sₐ provides synchronisation information allowing speech frame B to be decrypted, and Sₐ is in effect linked to speech frame A by location or numbering, or by being placed in the same packet.

In a second embodiment, encryption of speech frame A followed by encryption of speech frame B may cause synchronisation frame S_{ab} to be generated. The sequence of transmissions might then be A, S_{ab}, B, C, D; or more preferably A, S_{ab}, B, S_{ab}, C, D, where S_{ab} can be used by the receiver to decrypt speech frame C.

Where a TETRA MS is included in the call, the stream of speech frames and synchronisation frames is passed to the IWF.

The IWF (or the TETRA SwMI, gateway or ISI) then reduces the stream of speech and synchronisation frames to a sequence of speech frames and stolen frames containing synchronisation information for the next speech frame or for the next first half slot speech frame (depending on the encryption mechanism) instead of speech. The IWF, TETRA gateway or TETRA SwMI can follow the TETRA rules about stealing, e.g. such that no more than four speech frames are stolen per second, but four are stolen in the first second and at least one is stolen per second thereafter to minimise late entry delays.

Thus, for example, the above sequences would become (S_{ab}, B), (C, D), or (S_{ab}, S_{ab}), (C, D). Note that the sequence A, B, S_{ab}, C, D, for example, would be of no use to a TETRA air interface, because there is no mechanism for stealing only a second half-slot.

It is desirable to steal as often as possible in order to minimise late-entry delays, but also to limit stealing to minimise damage to the speech quality (e.g. by stealing only low importance speech frames). However, the IWF, TETRA gateway and TETRA SwMI (the TETRA SwMI could include the TETRA gateway) have no means of detecting low-importance speech frames in end-to-end encrypted speech because they are unable to decrypt the speech.

In the present embodiment, the transmitting MCPTT client creates synchronisation frames using the same method as a TETRA MS, even though there is no requirement for this inside the 3GPP system. However, instead of stealing the associated speech frames, the MCPTT client simply attaches or links the synchronisation frame to the associated speech frame or frames (the speech frame or pair of speech frames which caused the synchronisation information to be generated - the information may actually be used to decrypt the next speech frame or the first half-slot speech frame of the next pair of speech frames) and sends the speech frame(s) and the synchronisation frame to the MCPTT server for onward communication to the destination MCPTT clients and, if required, the IWF.

In the case of a receiving MCPTT client, the speech frame and attached synchronisation frame are accepted and the synchronisation frame is used as input to the decryption of the next speech frame, and to update the flywheel synchronisation. It may not be necessary for the MCPTT server to deliver speech frames to the MCPTT client in the correct order as they may be transmitted using the Real-time Transport Protocol (RTP) over UDP (UDP is itself sent over IP). RTP packets contain a sequence number (a buffer may be required in the receiver to absorb delays and correct ordering errors).

The synchronisation frame can be linked to the relevant speech frame either by including it in the same (e.g. RTP) packet, or by numbering the synchronisation frame so that it can be linked to the RTP packet number. Alternatively, a numbering scheme can be attached to the speech frame inside the RTP packet and to the synchronisation frame.

The transmitting MCPTT client generates the synchronisation frames according to the normal TETRA rules i.e. four synchronisations in the first second (either contiguous or distributed) and thereafter at least once per second, but preferably more frequently (up to four per second), e.g. by preferentially generating a synchronisation frame when a low importance speech frame is detected. The selective use of low-importance speech frames is of no benefit to other MCPTT clients, but it is beneficial to TETRA MSs.

Accordingly, if a group call includes TETRA MSs (note that there is no reason why the MCPTT client should know that TETRA MSs are included in the group call, so calls to this group may always use the TETRA codec if end-to-end encryption might be used and there is any possibility that TETRA MSs might be included in the group), the stream of speech frames and speech frames with linked (or attached) synchronisation frames is routed through the IWF. Then the IWF, TETRA gateway or TETRA SwMI deletes each speech frame that is linked or attached to a synchronisation frame such that the output to the TETRA air interfaces and thus to the TETRA MSs consists of a stream of TETRA speech frames and synchronisation frames that replace speech frames with the periodicity that is specified by TETRA and in a way that is designed to minimise late-entry delays and minimise damage to the speech quality. This method thus enables the IWF, TETRA gateway or TETRA SwMI to preferentially steal low importance speech frames without having any knowledge of the encrypted speech.

Other variations are possible. For example, the MCPTT client could generate additional encryption synchronisation frames for use by recipient MCPTT clients at a rate or four (or more) per second in addition to encryption synchronisation frames for low importance speech frames. In this case, the MCPTT client could mark either the encryption synchronisation frame or the related speech frame with an importance marker. The IWF (or TETRA SwMI) would then implement the TETRA end-to-end encryption synchronisation policy, dropping unnecessary synchronisation frames, and using the relevant synchronisation frames to steal suitable (e.g. low-importance) speech frames.

In another embodiment, the MCPTT client could generate additional synchronisation frames for MCPTT clients, but would mark certain encryption synchronisation frames or linked speech frames as "speech frame to be stolen for TETRA use". In this case, the IWF (or TETRA SwMI, gateway or ISI) would not need to understand the TETRA frame stealing rules, but would replace only those speech frames indicated by the MCPTT client.

Other embodiments could use the method of either of the above two embodiments, but the MCPTT client could generate a synchronisation frame for every single speech frame or every pair of speech frames, marking some of them in the manner described in the above two embodiments. The IWF (or the TETRA SwMI, gateway or ISI) would then drop all unnecessary synchronisation frames, either using the importance markers to implement the TETRA end-to-end encryption synchronisation policy or by replacing only the frames marked by the transmitting MCPTT client as to be stolen for TETRA .

Embodiments where a stealing indication is included with each speech frame are preferred, because the importance indication could give additional information about the speech content to an opponent attempting to intercept the encrypted speech.

It would also be possible for the IWF to implement a "hybrid" stealing method, whereby the IWF uses TETRA stealing rules to steal four speech frames in the first second and approximately one speech frame per second thereafter (assuming the encryption synchronisation frames are always provided or are provided sufficiently frequently) even when the stealing indicator (or importance indicator) does not indicate or recommend stealing. In this case, if the IWF receives an encryption synchronisation frame from the MCPTT/LTE system that includes a stealing recommendation, the IWF should immediately steal the associated speech frame, replacing it with the encryption synchronisation frame, and should then reset its timers for making its own decision on stealing.

In this way the hybrid method will work for speech received from MCPTT UEs that support the use of the stealing indicator, and for speech received from MCPTT UEs that do not support (or do not use) the stealing recommendation indicator.

The IWF may also be configured to work with MCPTT UEs that always set the stealing recommendation indicator, or that set the stealing recommendation indicator more than is required or useful. In this case, the IWF can ignore excessive stealing recommendations and revert to its inbuilt (TETRA) rules (e.g. counters and timers).

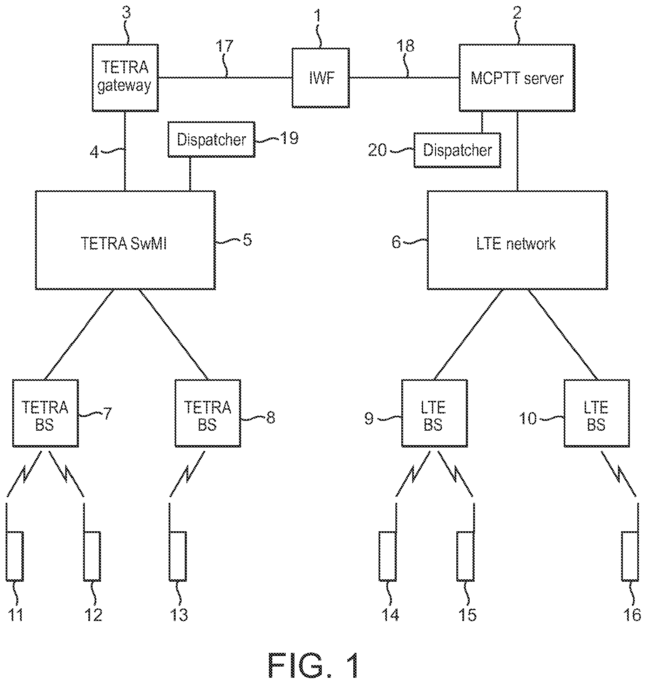

Figure 1 schematically illustrates interworking between a TETRA system and an MCPTT system.

Figure 1 shows an MCPTT server 2 which may be operated to provide mission critical voice call services to LTE user equipments (UEs) 14, 15, 16 each having an MCPTT client. Each MCPTT client connects to the MCPTT server 2 via an LTE base station (BS) 9, 10 and an LTE network 6. Using the MCPTT server 2, each MCPTT client 14, 15, 16 can set up individual and group calls to the other MCPTT clients. Thus a first MCPTT client 14 can make an individual call to, e.g. a second MCPTT client 15 or a third MCPTT client 16, or can make a group call to the second and third MCPTT clients 15, 16. An MCPTT dispatcher 20 can also set up or take part in individual or group calls to the MCPTT clients.

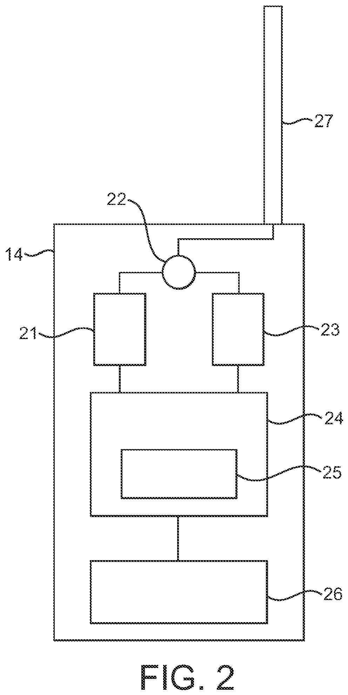

Figure 2 schematically illustrates an example of a user equipment having an MCPTT client 25. Radio antenna 27 (which could be internal or external to the device) is connected to a duplexer 22 which separates out received and transmitted radio signals. Received signals are passed into the radio receiver 21, and the received and decoded signalling, data and voice is passed into control unit 24 (containing one or more computers and/or digital signalling processors).

Messages formatted by the control unit 24 are passed into the radio transmitter 23 for transmission through the duplexer 22 to the antenna 27. Other arrangements are possible, e.g. using Ethernet instead of radio communications. The radio communications could be via 3GPP LTE, or WiFi or Bluetooth, etc. or some other wireless network.

The MCPTT client 25 is included within the control unit 24 as a software component. The control unit 24 passes it incoming messages addressed to the MCPTT client 25, and the MCPTT client 25 creates messages which it passes to the control unit 24 for onward transmission by the transmitter 23. A user can interface with the equipment and the MCPTT client 25 via a user interface 26, which may comprise a loudspeaker, a microphone, a (touch-sensitive) display, a keyboard, and/or various keys including, for example, a push-to-talk (PTT) button.

Referring again to Figure 1, Figure 1 also shows a TETRA Switching and Management Server (SwMI) 5 which may be operated to provide voice call and other services to TETRA mobile stations (MSs) 11, 12, 13. The TETRA MSs 11, 12, 13 are connected to the TETRA SwMI 5 via one or more TETRA based stations 7, 8. Using the TETRA SwMI 5, each TETRA MS 11, 12, 13 can set up individual and group calls to the other TETRA MSs. Thus for example, a first TETRA MS 11 can make an individual call to e.g. a second TETRA MS 12 or a third TETRA MS 13, or can make a group call to the first and second TETRA MSs 12, 13. A TETRA dispatcher 19 can also set up or take part in individual or group calls to the TETRA MSs 11, 12, 13.

Figure 1 also shows an interconnection between the TETRA SwMI 5 and the MCPTT server 2 using an MCPTT interworking function (IWF) 1. The IWF 1 is shown as connecting to a TETRA gateway 3 via interconnection 17, and the TETRA gateway 3 is shown as connecting to the TETRA SwMI 5 via a TETRA Inter System Interface (ISI) 4. However, other arrangements would be possible.

For example, the IWF 1 may connect to the TETRA SwMI 5 via a TETRA gateway 3 and the TETRA ISI 4, or may connect directly to the TETRA SwMI 5. The TETRA gateway 3 could be internal to the TETRA SwMI 5 or could be part of the IWF 1. The IWF 1 or TETRA gateway 3 or TETRA SwMI 5 provides a translation function between MCPTT signalling protocols and formats and TETRA signalling protocol and standards. The connection 17 from the IWF 1 to the TETRA gateway 3 could carry a generic protocol suitable for TETRA, P25, etc., or it could be specific to TETRA.

Using the IWF 1, it becomes possible for each of the TETRA MSs 11, 12, 13 to set up an individual speech call with each of the MCPTT clients 14, 15, or 16 or the MCPTT dispatcher 20, or to set up a group call to any two or more of the other TETRA MSs 12, 13, the MCPTT clients 14, 15, 16, and the TETRA and/or MCPTT dispatchers 19, 20. Similarly, each of the MCPTT clients 14, 15, 16 can set up a group call that includes one or more of the TETRA MSs 11, 12, 13 and TETRA dispatcher 19.

The connection 4 and optionally the interconnections 17, 18 may carry speech in the form of data packets using the RTP protocol, and may also carry control signalling using the RTCP protocol. Each speech data packet may carry one or two coded speech frames.

In a normal call, it may be adequate for the TETRA MSs 11, 12, 13 to use the TETRA speech codec, and for the MCPTT clients to use the AMR-WB codec. In a call using the IWF 1, it is therefore necessary to "transcode" the speech from one format to the other. Depending on the details of the IWF 1 and the TETRA gateway 3, the transcoding can be performed either by the IWF 1 or the TETRA gateway 3, or by the TETRA SwMI 5.

In order to transcode the speech, the transcoding device can decode the speech from the TETRA codec into an uncompressed digital representation of the audio waveform (e.g. 64 kb/s pcm), and then re-encode the speech using an AMR-WB codec (and vice versa), or a logical equivalent thereof.

However, there are circumstances when the TETRA and MCPTT users wish to communicate using end-to-end encryption. Such users will not trust the TETRA SwMI 5, the TETRA gateway 3 or the IWF 1 to hold the decryption key for the end-to-end encrypted speech. Without this decryption key, it is not possible for the TETRA SwMI 5, the TETRA gateway 3, or the IWF 1 to perform the transcription process. Similar considerations apply to the encryption key used by the MCPTT clients 14, 15, 16.

This means that where end-to-end encryption is required for calls that include both one or more TETRA MSs (and/or dispatcher) and one or more MCPTT clients (and/or dispatcher), transcoding is not possible, and the same speech codec must be used by the TETRA MSs and MCPTT clients.

The Adaptive Multi-Rate WideBand (AMR-WB) and Enhanced Voice Services Super-WideBand (EVS SWB) codecs are specified for use in MCPTT. However, it would not be feasible to use these in TETRA because they require too much radio bandwidth. The TETRA Algebraic Code-Excited Linear Prediction (ACELP) codec and AMR codec in 4.75 kb/s mode have been specified for TETRA. However, the AMR codec has not been adopted by TETRA users, and there is no agreed method of using it with end-to-end encryption. Thus, where there is a requirement to have end-to-end encrypted calls between TETRA MSs and MCPTT clients or dispatchers, the calls may use the TETRA ACELP codec, and the method of end-to-end encryption that has been specified for use with the TETRA ACELP codec.

In particular, the TETRA method of encryption synchronisation must be used on the TETRA air interfaces. The encryption synchronisation information is embedded in a U-plane information payload that has the same size as a TETRA ACELP speech frame when channel coded for transmission over the TETRA air interface. When it is required to send a synchronisation frame, the speech frame is replaced by the U-plane information. This is known as "U-plane stealing" or "stealing".

The synchronisation information indicates the synchronisation to be used to decrypt the next speech frame or the first speech frame of the pair of speech frames to be sent in the next TETRA air-interface time slot after the timeslot containing the missing (stolen) speech frame.

Stealing is used because of the bandwidth limitations of the π/4-DQPSK modulation system used in TETRA. The sequence of speech frames delivered to TETRA MSs must be maintained with the correct order and time spacing (including where a speech frame is lost or corrupted) so that the TETRA receiver can continue to generate synchronisation information correctly for each new expected speech frame (even if the speech frame is not received) until it receives a new synchronisation frame.

Thus, when an MCPTT client takes part in an end-to-end encrypted call where there is any possibility that the call might be routed to a TETRA MS, the call will use the TETRA ACELP speech codec and TETRA end-to-end encryption. The use of the TETRA ACELP codec may be decided by configuration for the particular call destination address in the MCPTT client during call set up, or may be decided by codec negotiation with the MCPTT server as part of the SIP signalling used by MCPTT for setting up calls. (In the latter case, group configuration data stored in the MCPTT server may cause the MCPTT server to decide that the TETRA codec is needed.)

In the present embodiment, the MCPTT client issues synchronisation frames at the same intervals as TETRA MS would, and sends them as additional data packets with the RTP speech frame packets to the MCPTT server. The RTP packets may contain one or multiple (e.g. pairs of) speech frames.

In a first embodiment, the synchronisation frame packets are sent adjacent to the speech frame or pair of speech frames packet from which they were generated, so that the synchronisation packets are merged into the stream of speech frame packets. Preferably, the synchronisation frame is sent directly following the speech frame or pair of speech frames from which it was generated, because it contains the synchronisation information to be used in the next speech frame or pair of speech frames.

If sent as an RTP packet, its position in the sequence of speech frames and synchronisation frames can be maintained by the RTP 16 bit sequence number. Each RTP packet may contain a marker indicating whether the packet contains speech or synchronisation. In this embodiment the RTP sequence number cannot be used as an indication of the time at which the speech frame needs to be delivered to the receivers because the sequence numbers include the interspersed synchronisation frames.

In a second embodiment, the speech frame (or pair of speech frames) contains a secondary sequence number (e.g. 4 bits long) that allows the MCPTT or TETRA base station ("BS") to ensure that the speech frame (or pair of speech frames) is sent at the right moment (e.g. in the correct TETRA timeslot) in the event that some speech frames are missing. The synchronisation frames are still merged into the correct places in the stream of speech frames.

In an extension to this embodiment, the synchronisation frame also contains the same secondary sequence number as a speech frames or pair of speech frames, which can either be the speech frame (or speech frame pair) from which the synchronisation frame was generated, or the speech frame (or speech frame pair) for which the synchronisation frame is to be used.

In a third (and preferred) embodiment, the synchronisation frame (or frames) is included in an RTP packet that carries a speech frame or pair (or group) of speech frames. In this case, the packet may contain a marker to indicate whether or not a synchronisation frame is included. The synchronisation frame may either be included with the speech frame(s) that caused the synchronisation frame to be generated, or it may be included with the speech frames that can be decrypted using the included synchronisation.

Where an RTP packet contains more than one speech frame and one or more encryption synchronisation frames, each synchronisation frame may include a marker to indicate which of the speech frames within that RTP packet the synchronisation frame is associated with. This could comprise a number (e.g. first, second, etc.) that matches the sequence order of the speech frame, or it could comprise a marker or name that matches a marker or name attached to one of the speech frames (e.g. "first half slot", "second half slot" etc.).

When an MCPTT client is transmitting end-to-end encrypted speech, the stream of RTP speech packets and merged or embedded synchronisation packets are sent to the MCPTT server 2 and thence distributed or broadcast to the MCPTT clients 14, 15, 16 and dispatcher 20, and, if the group includes TETRA MSs or is linked to a group that includes TETRA MSs, to the IWF 1. Thus the stream of RTP speech packets and embedded synchronisation packets is received without modification by the MCPTT clients 14, 15, 16, the MCPTT dispatcher 20 and the IWF 1. Depending on the quality of the uplinks and downlinks, they should be able to receive all the speech frames and related synchronisation frames without any loss of audio quality caused by stealing of speech frames.

In the IWF 1, TETRA gateway 3 or TETRA SwMI 5, the stream of merged speech packets and synchronisation information has to be modified to be suitable for use on the TETRA air interface. The modification involves detecting the synchronisation frames and then deleting the speech frame (or one of the pair) from which that the synchronisation frame was generated.

In the case of a merged stream according to the first embodiment, this will mean deleting the RTP packet with the sequence number that immediately preceded the sequence number of the RTP packet containing the synchronisation frame. The contents of the modified stream of RTP packets can now be placed into the appropriate TETRA downlink TDMA slots for transmission to the TETRA MSs 11, 12, 13.

However, where a speech frame is deleted, there will be a discontinuity in the RTP sequence numbers. The RTP receiver in the TETRA SwMI 5 or BS 7, 8 needs to recognise that this does not mean that a downlink half slot or slot is missing and must therefore be filled with null data etc. by the BS 7, 8, because if a null speech frame were inserted, transmission of the following synchronisation frames and speech frames would be delayed, and the delay would get extended every time another synchronisation frame was received by the TETRA SwMI 5 or BS 7, 8.

On the other hand, if the TETRA SwMI 5 or BS 7, 8 ignores gaps in the RTP sequence number, the TETRA receivers 11, 12, 13 will all lose encryption synchronisation when there is a genuine missing packet not caused by the stealing process.

The second embodiment described above, where a secondary sequence number is included in each speech frame and optionally in the synchronisation frames provides a means for the TETRA SwMI 5 or BS 7, 8 to detect that there are no missing frames for transmission, so that the SwMI 5 or BS 7, 8 does not insert an empty timeslot in the sequence of downlink transmissions to the TETRA MSs 11, 12, 13 when there is not a missing frame in the sequence of interleaved speech and data frames.

In the third embodiment described above, where the synchronisation frame is included in the same RTP packet as the speech frame or pair of speech frames from which the synchronisation frame was derived, removing a speech frame from the packet does not cause any disturbance to the RTP packet numbering.

When the stream of RTP packets containing encrypted speech and merged or embedded synchronisation information is sent from one MCPTT client 14 to one or more other MCPTT clients 15, 16, the one or more other MCPTT clients 15, 16 detect the first synchronisation frame and use it to initialise their encryption algorithms to decipher the next incoming speech frame. Late arrivals in the call will use the next received synchronisation frame, e.g. in a corresponding way to a TETRA MS.

When one or more TETRA MSs 11, 12 and 13 are included in the call, the stream of RTP packets is also sent to the IWF 1, and the IWF 1 routes the stream onto the TETRA gateway 3 and the TETRA SwMI 5. The IWF 1 or TETRA gateway 3 or TETRA SwMI 5 inspects each packet in the RTP stream. Thus, the payload of these packets may be in a defined format known to the IWF 1, TETRA gateway 3 or TETRA SwMI 5.

In the present embodiment, the IWF 1, TETRA gateway 3 or TETRA SwMI 5 has the capability of distinguishing synchronisation frames from speech frames by reading a marker at a defined location in the RTP packet. In the case of merged speech and synchronisation packets, the IWF 1, TETRA gateway 3 or TETRA SwMI 5 will delete the preceding RTP packet containing a speech frame whenever it detects a synchronisation frame in an RTP packet. (Note: this assumes that the synchronisation frame is inserted between the speech frame (or speech frame pair) from which it was generated and the speech frame for which it provides the synchronisation).

In the case of embedded synchronisation frames (the third embodiment), the IWF 1, TETRA gateway 3 or TETRA SwMI 5 drops the related speech frame from the RTP packet whenever it detects the presence of a synchronisation frame.

The TETRA gateway 3 can be pre-configured to know whether merged or embedded synchronisation frames are used. Alternatively, a parameter indicating which method is being used could be included in each RTP packet together with the synchronisation frame indicator.

There are a number of additional alternative ways of indicating such a parameter depending on how dynamically it might be expected to change; the method to be used can also be established during the Session Description Protocol (SDP) Offer/Answer session used to set up RTP multimedia streams in MCPTT. One such implementation of this embodiment would be to define two or more modes of operation of the TETRA codec depending on how the synchronisation frames and convey the mode to be used by using a format specific parameter as a media-level SDP attribute, e.g. "a = fmtp:".

Alternatively, the mode could be shown as an encoding parameter associated with the media format attribute specified in the RTP mapping by, e.g. "a=rtpmap:". This would be transparent to the transport and only be interpreted by the media handler at each endpoint.

Alternatively, two or more formal versions of the RTP payload contents for the TETRA voice codec(s) could be defined with IANA under different names, and the actual mode selected during the SDP Offer/Answer session as IANA-registered media format to be carried over RTP transport.

In an embodiment, the transmitting MCPTT client 14 may choose to provide additional synchronisation frames beyond those required by the TETRA MSs 11, 12, 13. This would be useful for further reducing the late-entry and cell change synchronisation delays experienced by other MCPTT clients 15 and 16, without causing any speech degradation.

However, the IWF 1, TETRA gateway 3 or TETRA SwMI 5 should drop these additional synchronisation frames and retain the speech frames from which they were generated. Thus in an embodiment, the transmitting MCPTT client 14 places a marker against each synchronisation frame that it merges into or embeds into the RTP stream indicating whether the IWF 1/TETRA Gateway 3/SwMI 5 should keep the synchronisation frame and drop the related speech frame or should drop the synchronisation frame and keep the related speech frame. The synchronisation frames to be kept would be only those inserted according to the TETRA end-to-end encryption recommendations (e.g. those intended to steal low importance speech frames)

Table 1 illustrates a possible format for the payload contents of an RTP packet (i.e. after the RTP, UDP and IP headers are removed), according to the third embodiment described above. Table 1 is essentially the same as table 5.1 in ETSI TS 100 392 8 v1.2.1 (2010-03) showing a Traffic PDU to be carried on the TETRA Inter System interface (ISI) inside an RTP packet.

The Framing Rate allows the destination SwMI to determine characteristics of the circuit mode speech/packet data stream. The Frame Number can be used by the destination SwMI to monitor the sequence of packets. The information element control element indicates whether the additional information and the call reference elements are included. The Additional information is for future expansion. The Call reference identifies the call instance to which the traffic belongs. The Traffic type indicates the type of codec in use, such as the TETRA ACELP codec. The Contents control and payload are defined in tables 2 to 14.

**Table 1: RTP packet contents**

| **Information element** | **Length** | **C/O/M** | **Remark** |
|---|---|---|---|
| Framing rate | 1 | M | |
| Frame number | 5 | M | |
| Information element control | 2 | M | |
| Additional information | 8 | C | For future expansion. See note. |
| Call reference | 24 | C | See note. |
| Traffic type | 4 | M | |
| Contents control and payload | Variabl e | M | |
| NOTE: This element shall be present as defined in the Information element control element. | | | |

Table 2 is derived from clause 5.3.7 of TS 100 392-3-8 v1.2.1, with the exception that additional values 8, 9, 10 and 11 have been defined to include the cases where speech payload and U-plane payload for the same speech payload are included. Traffic 1 and Traffic 2 contain the speech frames for the first half slot and second half slot of a TETRA TDMA timeslot. The U-plane payload normally contains the synchronisation information derived from the related Traffic 1 and Traffic 2 speech frames. (It can also contain codec to codec signalling.)

**Table 2: Contents control information element**

| **Information element** | **Length** | **Value** | **Remarks** |
|---|---|---|---|
| Contents control | 4 | 0 | Traffic 1 + Traffic 2; see table 3 |
| | | 1 | U-plane 1 + Traffic 2; see table 4 |
| | | 2 | U-plane 1 + U-plane 2; see table 5 |
| | | 3 | Traffic 1 single 30 ms, first half-slot; see note 1 and table 6 |
| | | 4 | Traffic 2 single 30 ms, second half-slot; see notes 1 and 2 and table 7 |
| | | 5 | Null i.e. traffic is not available, may be used to indicate a fully stolen 60 ms speech frame; see table 8 |
| | | 6 | U-plane 1, the second half-slot is not available; see note 3 and table 9 |
| | | 7 | U-plane 2, the first half-slot is not available; see note 3 and table 10 |
| | | 8 | Traffic 1 + U-plane 1; see table 11 |
| | | 9 | Traffic 2 + U-Plane 2; see table 12 |
| | | 10 | Traffic 1 + U-Plane 1 + Traffic 2; see table 13 |
| | | 11 | Traffic 1 + U-Plane 1 + Traffic 2 + U-Plane 2 ; see table 14 |
| | | 12 | Reserved |
| | | Etc. | etc. |
| | | 15 | Reserved |
| NOTE 1: In the unnumbered case the Traffic 1 may be used also for transmitting Traffic 2, in which case Traffic 2 should not be used. | | | |
| NOTE 2: In numbered frames normally used to inform that the Traffic 1 is not available. | | | |
| NOTE 3: Typically the unavailable half-slot has been stolen for a C-plane message. | | | |

Tables 3 to 10 are adapted from tables 5.8 to 5.15 of ETSI TCCE(03)000046_ETSI TS_100392-3-8v0123 (2016-06) which is a proposed upgrade to TS 100 392-3-8v1.2.1.

**Table 3: Contents of the Contents control and payload information element for traffic 1 and traffic 2**

| **Information element** | **Length** | **Value** | **Remarks** |
|---|---|---|---|
| Contents control | 4 | 0 | Traffic 1 and traffic 2 |
| Speech payload 1 | 137 | | Padding bits shall be set to "0" |
| Padding bits in speech payload | 7 | | |
| Speech payload 2 | 137 | | Padding bits shall be set to "0" |
| Padding bits in speech payload | 7 | | |

**Table 4: Contents of the Contents control and payload information element for U-plane 1 and traffic 2**

| **Information element** | **Length** | **Value** | **Remarks** |
|---|---|---|---|
| Contents control | 4 | 1 | U-plane 1 and traffic 2 |
| U-stealing payload 1 | 124 | | Padding bits shall be set to "0" |
| Padding bits in U-plane payload | 4 | | |
| Speech payload 2 | 137 | | Padding bits shall be set to "0" |
| Padding bits in speech payload | 7 | | |

**Table 5: Contents of the Contents control and payload information element for U-plane 1 and U-plane 2**

| **Information element** | **Length** | **Value** | **Remarks** |
|---|---|---|---|
| Contents control | 4 | 2 | U-plane 1 and U-plane 2 |
| U-stealing payload 1 | 124 | | Padding bits shall be set to "0" |
| Padding bits in U-plane payload | 4 | | |
| U-stealing payload 2 | 124 | | Padding bits shall be set to "0" |
| Padding bits in U-plane payload | 4 | | |

**Table 6: Contents of the Contents control and payload information element for Traffic 1**

| **Information element** | **Length** | **Value** | **Remarks** |
|---|---|---|---|
| Contents control | 4 | 3 | Traffic 1 |
| Speech payload 1 | 137 | | Padding bits shall be set to "0" |
| Padding bits in speech payload | 7 | | |

**Table 7: Contents of the Contents control and payload information element for Traffic 2**

| **Information element** | **Length** | **Value** | **Remarks** |
|---|---|---|---|
| Contents control | 4 | 4 | Traffic 2 |
| Speech payload 2 | 137 | | Padding bits shall be set to "0" |
| Padding bits in speech payload | 7 | | |

**Table 8: Contents of the Contents control and payload information element for Null**

| **Information element** | **Length** | **Value** | **Remarks** |
|---|---|---|---|
| Contents control | 4 | 5 | Null |

**Table 9: Contents of the Contents control and payload information element for U-plane 1**

| **Information element** | **Length** | **Value** | **Remarks** |
|---|---|---|---|
| Contents control | 4 | 6 | U-plane 1 |
| U-stealing payload 1 | 124 | | Padding bits shall be set to "0" |
| Padding bits in U-plane payload | 4 | | |

**Table 10: Contents of the Contents control and payload information element for U-plane 2**

| **Information element** | **Length** | **Value** | **Remarks** |
|---|---|---|---|
| Contents control | 4 | 7 | U-plane 2 |
| U-stealing payload 2 | 124 | | Padding bits shall be set to "0" |
| Padding bits in U-plane payload | 4 | | |

Tables 11 to 14 are new, and provide for the various possible combinations where speech payload and U-plane payload for that speech frame are both included in the RTP packet. In these tables, the U-plane payload is always accompanied by a steal indicator. The steal indicator indicates whether the speech payload or the U-plane payload should be transmitted on a TETRA π/4 DQPSK traffic channel (a "TCH").

The steal indicator is not transmitted on a TETRA TCH; however when a U-plane payload is transmitted on TCH, the TCH timeslot is marked as having a stolen first half slot by use of a special training sequence and a marker in the first stolen half slot indicates if the second half slot has also been stolen.

There are other ways of implementing the steal indicator in the RTP packet. For example, one of more of the padding bits for either the speech payload or the U-plane payload (or even the RTP header) could be used for this.

**Table 11: Contents of the Contents control and payload information element for Traffic 1 and U-plane 1**

| **Information element** | **Length** | **Value** | **Remarks** |
|---|---|---|---|
| Contents control | 4 | 8 | Traffic 1 and U-plane 1 |
| Speech payload 1 | 137 | | Padding bits shall be set to "0" |
| Padding bits in speech payload | 7 | | |
| Steal indicator 1 | 1 | | See note |
| U-plane payload 1 | 124 | | Padding bits shall be set to "0" |
| Padding bits in U-plane payload | 3 | | |
| NOTE: If steal indicator 1 = 1, speech payload 1, padding bits and steal indicator 1 shall be removed before transmission on a TETRA π/4-DQPSK traffic channel. If steal indicator 1 = 0, steal indicator 1 , U-plane payload 1 and padding bits shall be removed before transmission on a TETRA π/4-DQPSK traffic channel | | | |

**Table 12: Contents of the Contents control and payload information element for Traffic 2 and U-plane 2**

| **Information element** | **Length** | **Value** | **Remarks** |
|---|---|---|---|
| Contents control | 4 | 9 | Traffic 2 and U-plane 2 |
| Speech payload 2 | 137 | | Padding bits shall be set to "0" |
| Padding bits in speech payload | 7 | | |
| Steal indicator 2 | 1 | | See note |
| U-plane payload 2 | 124 | | Padding bits shall be set to "0" |
| Padding bits in U-plane payload | 3 | | |
| NOTE: If steal indicator 2 = 1, speech payload 2, padding bits and steal indicator 2 shall be removed before transmission on a TETRA π/4-DQPSK traffic channel. If steal indicator 2 = 0, steal indicator 2, U-plane payload 2 and padding bits shall be removed before transmission on a TETRA π/4-DQPSK traffic channel. | | | |

**Table 13: Contents of the Contents control and payload information element for Traffic 1, U-plane 1 and Traffic 2**

| **Information element** | **Length** | **Value** | **Remarks** |
|---|---|---|---|
| Contents control | 4 | 10 | Traffic 1, U-plane 1 and Traffic 2 |
| Speech payload 1 | 137 | | Padding bits shall be set to "0" |
| Padding bits in speech payload | 7 | | |
| Steal indicator 1 | 1 | | See note |
| U-plane payload 1 | 124 | | Padding bits shall be set to "0" |
| Padding bits in U-plane payload | 3 | | |
| Speech payload 2 | 137 | | |
| Padding bits in speech payload | 7 | | |
| NOTE: If steal indicator 1 = 1, speech payload 1, padding bits and steal indicator 1 shall be removed before transmission on a TETRA π/4-DQPSK traffic channel. If steal indicator 1 = 0, steal indicator 1, U-plane payload 1 and padding bits shall be removed before transmission on a TETRA π/4-DQPSK traffic channel. | | | |

**Table 14: Contents of the Contents control and payload information element for Traffic 1, U-plane 1, Traffic 2 and U-plane 2**

| **Information element** | **Length** | **Value** | **Remarks** |
|---|---|---|---|
| Contents control | 4 | 11 | Traffic 1, U-plane 1 and Traffic 2 |
| Speech payload 1 | 137 | | Padding bits shall be set to "0" |
| Padding bits in speech payload | 7 | | |
| Steal indicator 1 | 1 | | See note 1 |
| U-plane payload 1 | 124 | | Padding bits shall be set to "0" |
| Padding bits in U-plane payload | 3 | | |
| Speech payload 2 | 137 | | Padding bits shall be set to "0" |
| Padding bits in speech payload | 7 | | |
| Steal indicator | 1 | | See note 2 |
| U-plane payload 2 | 124 | | Padding bits shall be set to "0" |
| Padding bits in U-plane payload | 3 | | |
| NOTE: If steal indicator 1 = 1, speech payload 1, padding bits and steal indicator 1 shall be removed before transmission on a TETRA π/4-DQPSK traffic channel. If steal indicator 1 = 0, steal indicator 1, U-plane payload 1 and padding bits shall be removed before transmission on a TETRA π/4-DQPSK traffic channel. | | | |

Other variants of Table 1 are possible.

In the present embodiment, the transmitting MCPTT client sends speech payload and U-plane payload in the format of Table 1 and tables 11 to 14 (or prearranged variants), including (in the U-plane payloads) at least those synchronisation frames needed by the TETRA MSs. All these are sent with the steal indicator set to "1". The transmitting client could also optionally include additional synchronisation frames with the steal indicator set to "0", that would be only for the benefit of the MCPTT clients taking part in the call (e.g. to reduce synchronisation delays following late entry and cell reselection or change of downlink bearer e.g. from unicast to multicast). It would be possible for every speech payload to be accompanied by a U-plane payload.

The MCPTT server 2 sends this stream of RTP packets containing speech frames and synchronisation frames both to the LTE base stations 9, 10 and to the IWF 1. The LTE base stations 9, 10 would send the LTE stream to MCPTT clients 14, 15, 16 without alteration, either over unicast bearers (one per client) or over a multimedia broadcast multicast service (MBMS) bearer.

MCPTT UEs 14, 15, 16 may ignore the steal indicators. However, the IWF 1 (or the TETRA gateway 3 or the TETRA SwMI 5) modifies the RTP payload according to the steal indicator. If the IWF 1 or TETRA gateway 3 performs the conversion, it modifies the format of tables 11 to 14 to become one of the formats in tables 3 to 6, 9 and 10.

More specifically, depending on the values of the steal indicators:
- contents control 8 (table 11) is modified to:
   - contents control 3 (table 6) or contents control 6 (table 9);
- contents control 9 (table 12) is modified to:
   - contents control 4 (table 7) or contents control 7 (table 10);
- contents control 10 (table 13) is modified to:
   - contents control 0 (table 3) or contents control 1 (table 4);
- contents control 11 (table 14) is modified to:
   - contents control 0 (table 3) or contents control 1 (table 4) or contents control 2 (table 5);

If the TETRA SwMI 5 performs the conversion, it may format the payloads directly into the MAC level data to be sent on the TETRA traffic channels, optionally bypassing the TETRA ISI 4.

The MCPTT client 14 sends the stream of RTP packets containing speech and synchronisation frames to the MCPTT server 2, which in turn distributes the packets towards the IWF 1 and other MCPTT clients 15, 16 involved in the call.

One of the purposes of using a Service Delivery Protocol (SDP) to set up RTP real time media streams is to allow the endpoints to understand the resources and format to be agreed for carriage of the payload data, which includes the bandwidth necessary to transport the media format. However, the use of a modified RTP payload format for the combined speech plus synchronisation frames will change the total bandwidth needed to carry the necessary payload in comparison with an RTP payload containing only the frames suitable for carriage over the TETRA air interface.

For example, if the MCPTT client 14 decided to provide a synchronisation frame for every speech frame when using a TETRA 64-bit block cipher, then the implicit speech data rate would double from the standard data rate of 4.7kbps to 9.4kbps. Furthermore, the fixed data rate of frame delivery for frames suitable for the TETRA air interface may be modified to a variable rate, depending on how and when the synchronisation frames are attached or linked to the speech frames.

Accordingly, there is a need for a mechanism in which the Mission Critical system determines which RTP payload format(s) for the TETRA codec is in use, or is signalled to adapt from a default scheme.

Known methods for indicating frame formats of particular RTP packets once the RTP session has started do not provide prior warning of the expected bandwidth in order to allow the system to be prepared.

One possible method for indicating the expected bandwidth in an embodiment is to make use of the optional additional bandwidth modifier attributes ("b=") exchanged in the SDP Offer/Answer process.

Alternative mechanisms to indicate bandwidth in this way include, but are not limited to: making use of the Conference Total ("b=CT:") bandwidth modifier attribute, or the Application Specific ("b=AS:") bandwidth modifier attribute. The Conference Total modifier may be used if the bandwidth of a session or media in a session is different from the original scope, and then an indication giving the proposed upper limit to the bandwidth may be supplied.

The Application Specific modifier is used to indicate the maximum resources in kbps that are needed for the media stream (RTP plus any RTCP usage). The Application Specific bandwidth includes lower level transport and networking protocols (such as UDP and IP).

Although the CT parameter refers to all session media at all sites, and AS for a single media at a single site, in the case of MCPTT client to MCPTT server, and MCPTT server towards IWF and TETRA SwMI, there are only the two endpoints involved at each time, and so the two are essentially equivalent with the conference consisting of two endpoints.

In an embodiment, the receiving node (e.g. MCPTT server) is able to infer the anticipated RTP payload coding from the bandwidth requested in SDP, the offer-answer request in the case of the Conference Total modifier, and also in the case of the Application Specific modifier if the MCPTT system also knew the underlying transport protocols to be used (typically UDP over IP)

Another potential mechanism is the use of the SDP media-specific format ("a = fmtp:") which is intended to carry payload-format-specific parameters without needing to be understood by SDP itself.

In an embodiment, modes of operation for the TETRA codec payload format may be defined, with one mode being a fixed rate, carrying frames suitable for the TETRA air interface, and one or more other modes indicating the modified payload type(s) depending on how the synchronisation frames are carried alongside the relevant speech frames.

Whilst it is desirable that all MCPTT clients supporting the TETRA codec also support the operation of the present embodiment in order to improve voice quality on the LTE system as well as properly interwork, all of the proposed mechanisms for indicating the different bandwidths and frame formats have the further advantage of allowing MCPTT handset clients that support the TETRA codec but that do not support operation according to the present embodiment to be detected (because they do not supply the bandwidth modifier or format indicator), and the MCPTT system may act accordingly in this case.

In such a case with a mix of MCPTT clients, the MCPTT server 2 may carry out the merging of speech frames and synchronisation frames before distributing to legacy clients within the LTE system. It would then be beneficial to have two multicast distributions within the LTE system: one for legacy MCPTT clients and one for clients supporting operation according to the present embodiment. This would also impact the decision of the MCPTT server 2 on whether to distribute to some service areas of a call group by multicast or unicast, because handsets supporting, and not supporting, operation according to the present embodiment would need to receive separate multicast streams because of the different encoding.

Furthermore, the function that carries out the merging and modification of the speech frames and synchronisation frames into frames suitable for transmission over the TETRA air interface (e.g. IWF 1, TETRA Gateway 3, SwMI 5) may change the RTP format by terminating, modifying and re-starting the RTP session supplied from the MCPTT server 2 toward the TETRA SwMI 5 becoming a RTP synchronisation source and keeping the identity of the original source, in order that the SwMI 5 is able to identify the source MCPTT server.

It will be appreciated that the present embodiments are directed to techniques in which the MCPTT client generates synchronisation frames using the same periodicity rules as a TETRA MS (or labelling the frames for stealing), but attaching or linking the synchronisation frames to the related speech frames instead of replacing the speech frames.

A benefit of this is that by dropping the linked or attached speech frames, the IWF 1 (or TETRA SwMI 5) can implement the TETRA encryption synchronisation periodicity rules without having any knowledge of the content of the speech frames. Another benefit is that MCPTT clients 14, 15, 16 can receive end-to-end encrypted speech that suffers no quality degradation from dropped speech frames.

In preferred embodiments, RTP packets may be reduced into packets suitable for the TETRA air interface by dropping either the speech frame(s) or the U-plane data according to the steal indication.

In preferred embodiments, both the speech payload and the U-Plane payload for the same speech frame are placed in the RTP packet together with a steal indicator.

In preferred embodiments, the transmitting MCPTT client is allowed to send additional synchronisation frames beyond those that can be used on the TETRA air interface, so that MCPTT clients can enjoy very low late-entry and cell change delays, and each synchronisation frame may be marked so that the TETRA gateway knows which synchronisation frames to use for stealing and which synchronisation frames to drop.

In preferred embodiments, the MCPTT server is modified to interpret the received SDP messages and infer the payload coding format. An MCPTT server media handler may be provided to handle revised RTP streams and bandwidth in the case of a mix of MCPTT clients supporting the TETRA codec, but either supporting and not supporting the bandwidth. In preferred embodiments, the RTP payload format indicators may be included in the same group call. In preferred embodiments, the MCPTT server may be modified to decide on how the multicast/unicast split of the media stream is determined if supporting and non-supporting TETRA clients are present.

In preferred embodiments, the IWF and/or SwMI is modified to handle the merging of speech and synchronisation frames as well as to act as an RTP mixer to modify the bandwidth and payload format as the stream is passed through.

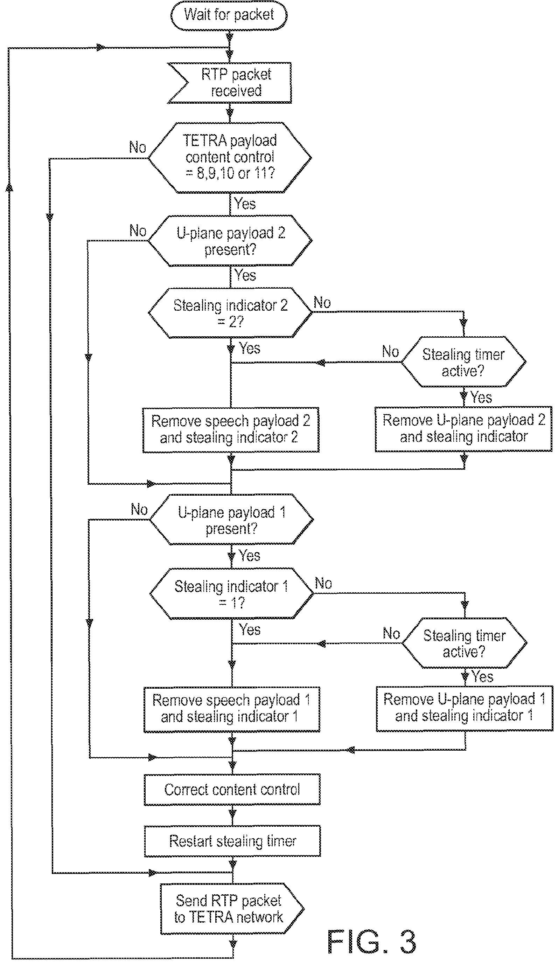

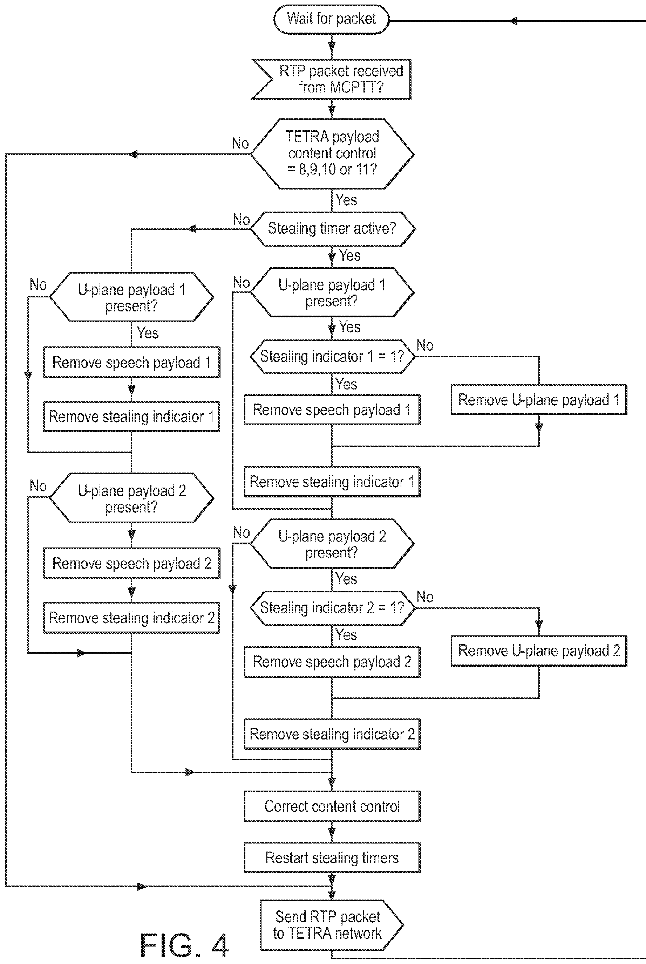

Figures 3 and 4 illustrate two different methods by which the TETRA gateway 3, etc. may analyse incoming RTP packets from the MCPTT server 2, and decide whether to remove speech payloads or u-plane payloads.

In Figure 3, the U-plane payload 2 is assessed before u-plane payload 1. This is to reduce problems that would occur if the stealing timer (typically set to 1 second) were to expire after processing payload 1 but before processing payload 2. This is because it is not possible in TETRA to only steal speech payload 2, whereas it is possible to steal only speech payload 1.

The timer may be provided in order to implement stealing if the transmitting MCPTT UE 14 provides U-Plane payloads but does not mark any payloads for stealing. Accordingly, the timer may be provided as a backup. If the timer is running (active) when a U-plane payload arrives that is not marked for stealing, the TETRA gateway 3, etc. does not steal payload 2. If, however, the time then expires before payload 1 is processed, payload 1 may be stolen.

Figure 4 illustrates a method where the stealing timer is only tested once, i.e. so that the above described problem does not occur. However, the process is somewhat more complicated.

In a practical implementation, software code may be provided as a large CASE statement separating out the different content control values. It might be preferable to check the status of the timer once, e.g. at the start of the process, and to record the value (active or not active) for later use, e.g. so as to avoid the possibility of a change in timer status causing only speech payload 2 to be stolen.

In Figures 3 and 4, the "correct content control" box is provided to adjust the value of the content control field to one of the original TETRA values (1 to 6), e.g. as described above.

More specifically, depending on the values of the steal indicators:
- contents control 8 (table 11) is modified to:
   - contents control 3 (table 6) or contents control 6 (table 9);
- contents control 9 (table 12) is modified to:
   - contents control 4 (table 7) or contents control 7 (table 10);
- contents control 10 (table 13) is modified to:
   - contents control 0 (table 3) or contents control 1 (table 4);
- contents control 11 (table 14) is modified to:
   - contents control 0 (table 3) or contents control 1 (table 4) or contents control 2 (table 5);

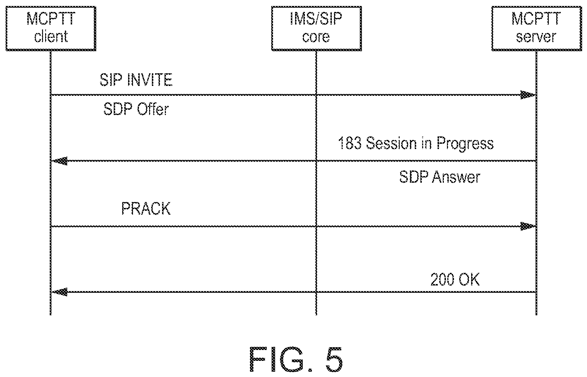

Figure 5 illustrates schematically an SDP Offer / Answer Process is accordance with an embodiment of the present invention.

The SDP Offer / Answer process of Figure 5 is to set up an RTP stream, e.g. as may take place during MCPTT operation where a MCPTT client sets up a call session to send voice data for distribution by the MCPTT Server.

As shown in Figure 5, a SIP INVITE message is firstly sent from the client towards the MCPTT server. It may be modified in terms of routing and source contents by the IMS/SIP core as it passes through. The contents of the SDP Offer body included in the invite may include, but not be limited to, contents similar to the following:
m=audio 3458 RTP/AVP 96
a=rtpmap:96 TETRA-ACELP/8000
a=fmtp:96 steal-mode=2
b=CT:9.7

In this case, the audio RTP format number 96 is dynamically assigned by the inviter to the TETRA-ACELP codec, sampled at 8kHz. The definition of the RTP format for TETRA-ACELP is defined with a parameter denoted steal-mode, which could indicate the precise nature of the RTP payload.

For example, steal-mode = 1 could correspond to a payload consisting of frames suitable for TETRA air interface distribution, whilst steal-mode = 2 could indicate that each payload consists of a speech frame and the related synchronisation frame, as described above.

Secondly, a response message (e.g. 183 Session in Progress) is sent to the SIP INVITE, including the SDP Answer that accepts the offer, confirming the proposed attributes, but possibly indicating different port numbers that the receiver wishes to receive the media on
m= audio 3460 RTP/AVP 96
a=rtpmap:96 TETRA-ACELP/8000
a=fmtp:96 steal-mode=2
b=CT:9.7

Thirdly, the MCPTT client sends a provisional acknowledgement (PRACK) towards the MCPTT server

Fourthly, the MCPTT server responds with a confirmation 200 (OK) message

In some mechanisms, such as a Voice over LTE unicast call, the SDP Answer may be sent in the 200 (OK) message

As can be seen from the above, the present invention, in its preferred embodiments at least, provides an improved mobile communications system.

This is achieved, in the preferred embodiments of the present invention at least, by configuring a communications station to generate encrypted speech frames and one or more encryption synchronisation frames for transmission, to associate each of the generated encryption synchronisation frames with a corresponding encrypted speech frame, and to then transmit both the encrypted speech frames and the one or more associated encryption synchronisation frames to the system infrastructure of the communications system.

## Claims

1. A method of operating a communications system comprising:
a communications station of the communications system:
generating encrypted speech frames and one or more encryption synchronisation frames for transmission;
associating each of the one or more encryption synchronisation frames with one or more corresponding encrypted speech frames of the encrypted speech frames;
transmitting to system infrastructure of the communications system a set of frames comprising the encrypted speech frames and the one or more associated encryption synchronisation frames; and
transmitting to the system infrastructure information indicating which one or more of the transmitted encrypted speech frames should be replaced by the system infrastructure with a corresponding encryption synchronisation frame of the one or more associated encryption synchronisation frames; and
the system infrastructure of the communications system:
receiving the set of frames from the communications station;
receiving the information from the communications station;
using the information to determine which of the encrypted speech frames should be replaced with a corresponding encryption synchronisation frame of the one or more associated encryption synchronisation frames, and replacing one or more of the encrypted speech frames with a corresponding encryption synchronisation frame of the one or more associated encryption synchronisation frames to produce a modified set of frames; and
transmitting the modified set of frames to one or more TETRA communications stations.

2. A method of operating a communications station of a communications system, the method comprising the communications station:
generating encrypted speech frames and one or more encryption synchronisation frames for transmission;
associating each of the one or more encryption synchronisation frames with one or more corresponding encrypted speech frames of the encrypted speech frames;
transmitting to system infrastructure of the communications system a set of frames comprising the encrypted speech frames and the one or more associated encryption synchronisation frames; and
transmitting to the system infrastructure information indicating which one or more of the transmitted encrypted speech frames should be replaced by the system infrastructure with a corresponding encryption synchronisation frame of the one or more associated encryption synchronisation frames.

3. A method of operating system infrastructure of a communications system, the method comprising the system infrastructure:
receiving from a communications station a set of frames comprising encrypted speech frames and one or more associated encryption synchronisation frames;
receiving from the communications station information indicating which one or more of the encrypted speech frames should be replaced with a corresponding encryption synchronisation frame of the one or more associated encryption synchronisation frames;
using the information to determine which of the encrypted speech frames should be replaced with a corresponding encryption synchronisation frame of the one or more associated encryption synchronisation frames, and replacing one or more of the encrypted speech frames with a corresponding encryption synchronisation frame of the one or more associated encryption synchronisation frames to produce a modified set of frames; and
transmitting the modified set of frames to one or more TETRA communications stations.

4. The method of any one of the preceding claims, wherein:
each of the one or more encryption synchronisation frames is associated with one or more corresponding encrypted speech frames by placing the encryption synchronisation frame in a predetermined position in the set of frames to be transmitted relative to the corresponding encrypted speech frame or frames; and/or
each of the one or more encryption synchronisation frames is associated with one or more corresponding encrypted speech frames using one or more sequence numbers; and/or
each of the one or more encryption synchronisation frames is associated with one or more corresponding encrypted speech frames by combining the encryption synchronisation frame with the corresponding encrypted speech frame or frames into a single data packet.

5. The method of any one of the preceding claims, further comprising:
the system infrastructure replacing one or more encrypted speech frames with a corresponding encryption synchronisation frame in a pre-determined manner.

6. The method of any one of the preceding claims, further comprising the system infrastructure transmitting the set of frames to another communications station.

7. The method of any one of the preceding claims, wherein the communications station comprises a non-TETRA communications station.

8. A communications system comprising:
a communications station and system infrastructure;
wherein the communications station is configured to:
generate encrypted speech frames and one or more encryption synchronisation frames for transmission;
associate each of the one or more encryption synchronisation frames with one or more corresponding encrypted speech frames of the encrypted speech frames;
transmit to the system infrastructure a set of frames comprising the encrypted speech frames and the one or more associated encryption synchronisation frames; and
transmit to the system infrastructure information indicating which one or more of the transmitted encrypted speech frames should be replaced by the system infrastructure with a corresponding encryption synchronisation frame of the one or more associated encryption synchronisation frames; and
wherein the system infrastructure is configured to:
receive the set of frames from the communications station;
receive the information from the communications station;
use the information to determine which of the encrypted speech frames should be replaced with a corresponding encryption synchronisation frame of the one or more associated encryption synchronisation frames, and replace one or more of the encrypted speech frames with a corresponding encryption synchronisation frame of the one or more associated encryption synchronisation frames to produce a modified set of frames; and
transmit the modified set of frames to one or more TETRA communications stations.

9. A communications station comprising:
processing circuitry configured to generate encrypted speech frames and one or more encryption synchronisation frames for transmission;
processing circuitry configured to associate each of the one or more encryption synchronisation frames with one or more corresponding encrypted speech frames of the encrypted speech frames; and
a transmitter configured to transmit to system infrastructure a set of frames comprising the encrypted speech frames and the one or more associated encryption synchronisation frames;
wherein the communications station is configured to transmit information to the system infrastructure indicating which one or more of the transmitted encrypted speech frames should be replaced by the system infrastructure with a corresponding encryption synchronisation frame of the one or more associated encryption synchronisation frames.

10. System infrastructure of a communications system comprising:
a receiver configured to receive from a communications station a set of frames comprising encrypted speech frames and one or more associated encryption synchronisation frames, and information indicating which one or more of the encrypted speech frames should be replaced with a corresponding encryption synchronisation frame of the one or more associated encryption synchronisation frames;
processing circuitry configured to use the information to determine which of the encrypted speech frames should be replaced with a corresponding encryption synchronisation frame of the one or more associated encryption synchronisation frames, and to replace one or more of the encrypted speech frames with a corresponding encryption synchronisation frame of the one or more associated encryption synchronisation frames to produce a modified set of frames; and
a transmitter configured to transmit the modified set of frames to one or more TETRA communications stations.

11. The system or station of any one of claims 8-10, wherein:
the communications station is configured to associate each of the one or more encryption synchronisation frames with one or more corresponding encrypted speech frames by placing the encryption synchronisation frame in a predetermined position in the set of frames to be transmitted relative to the corresponding encrypted speech frame or frames; and/or
the communications station is configured to associate each of the one or more encryption synchronisation frames with one or more corresponding encrypted speech frames using one or more sequence numbers; and/or
the communications station is configured to associate each of the one or more encryption synchronisation frames with one or more corresponding encrypted speech frames by combining the encryption synchronisation frame with the corresponding encrypted speech frame or frames into a single data packet.

12. The system or station of any one of claims 8-11, wherein the system infrastructure is configured to replace one or more encrypted speech frames with a corresponding encryption synchronisation frame in a pre-determined manner.

13. The system or station of any one of claims 8-12, wherein the system infrastructure is configured to transmit the set of frames to another communications station.

14. The system or station of any one of claims 8-13, wherein the communications station comprises a non-TETRA communications station.

15. A computer program element comprising computer software code portions for performing a method of operating a communications station of a communications system as claimed in claim 2, or any of claims 4 or 7 when depending on claim 2, when the program element is run on data processing means, or a computer program element comprising computer software code portions for performing a method of operating system infrastructure of a communications system as claimed in claim 3, or any one of claims 4, 5, 6, 7 when depending on claim 3, when the computer program element is run on data processing means.

## Patentansprüche

1. Verfahren zum Betreiben eines Kommunikationssystems, umfassend:
dass eine Kommunikationsstation des Kommunikationssystems:
verschlüsselte Sprach-Frames und eines oder mehrerer Verschlüsselungs-Synchronisations-Frames für das Senden erzeugt;
jedes der einen oder mehreren Verschlüsselungs-Synchronisations-Frames einem oder mehreren entsprechenden verschlüsselten Sprach-Frames der verschlüsselten Sprach-Frames zuordnet;
einen Satz von Frames umfassend die verschlüsselten Sprach-Frames und den einen oder die mehreren zugeordneten Verschlüsselungs-Synchronisations-Frames an die Systeminfrastruktur des Kommunikationssystems sendet; und
Informationen an die Systeminfrastruktur sendet, die angeben, welcher eine oder mehrere der gesendeten verschlüsselten Sprach-Frames von der Systeminfrastruktur durch einen entsprechenden Verschlüsselungs-Synchronisations-Frame des einen oder der mehreren zugeordneten Verschlüsselungs-Synchronisations-Frames ersetzt werden sollte; und
wobei die Systeminfrastruktur des Kommunikationssystems:
den Satz von Frames von der Kommunikationsstation empfängt;
die Informationen von der Kommunikationsstation empfängt;
die Informationen verwendet, um zu bestimmen, welcher der verschlüsselten Sprach-Frames durch einen entsprechenden Verschlüsselungs-Synchronisations-Frame des einen oder der mehreren zugeordneten Verschlüsselungs-Synchronisations-Frames ersetzt werden sollte, und den einen oder die mehreren der verschlüsselten Sprach-Frames durch einen entsprechenden Verschlüsselungs-Synchronisations-Frame des einen oder der mehreren zugeordneten Verschlüsselungs-Synchronisations-Frames ersetzt, um einen modifizierten Satz von Frames zu produzieren; und
den modifizierten Satz von Frames an eine oder mehrere TETRA-Kommunikationsstationen sendet.

2. Verfahren zum Betreiben einer Kommunikationsstation eines Kommunikationssystems, wobei das Verfahren umfasst, dass die Kommunikationsstation:
verschlüsselte Sprach-Frames und eines oder mehrerer Verschlüsselungs-Synchronisations-Frames für die Sendung erzeugt;
jedes der einen oder mehreren Verschlüsselungs-Synchronisations-Frames zu einem oder mehreren entsprechenden verschlüsselten Sprach-Frames der verschlüsselten Sprach-Frames zuordnet;
an die Systeminfrastruktur des Kommunikationssystems einen Satz von Frames sendet, der die verschlüsselten Sprach-Frames und den einen oder die mehreren zugeordneten Verschlüsselungs-Synchronisations-Frames umfasst; und
an die Systeminfrastruktur Informationen sendet, die angeben, welcher eine oder mehrere der gesendeten verschlüsselten Sprach-Frames von der Systeminfrastruktur durch einen entsprechenden Verschlüsselungs-Synchronisations-Frame des einen oder der mehreren zugeordneten Verschlüsselungs-Synchronisations-Frames ersetzt werden sollte.

3. Verfahren zum Betreiben von Systeminfrastruktur eines Kommunikationssystems, wobei das Verfahren umfasst, dass die Systeminfrastruktur:
von einer Kommunikationsstation einen Satz von Frames empfängt, der verschlüsselte Sprach-Frames und einen oder mehrere zugeordnete Verschlüsselungs-Synchronisations-Frames umfasst;
von der Kommunikationsstation Informationen empfängt, die angeben, welcher eine oder mehrere der verschlüsselten Sprach-Frames durch einen entsprechenden Verschlüsselungs-Synchronisations-Frame des einen oder der mehreren zugeordneten Verschlüsselungs-Synchronisations-Frames ersetzt werden sollte;
die Informationen verwendet, um zu bestimmen, welcher der verschlüsselten Sprach-Frames durch einen entsprechenden Verschlüsselungs-Synchronisations-Frame des einen oder der mehreren zugeordneten Verschlüsselungs-Synchronisations-Frames ersetzt werden sollte, und den einen oder die mehreren der verschlüsselten Sprach-Frames durch einen entsprechenden Verschlüsselungs-Synchronisations-Frame des einen oder der mehreren zugeordneten Verschlüsselungs-Synchronisations-Frames ersetzt, um einen modifizierten Satz von Frames zu produzieren; und
den modifizierten Satz von Frames an eine oder mehrere TETRA-Kommunikationsstationen sendet.

4. Verfahren nach einem der vorstehenden Ansprüche, wobei:
jeder des einen oder der mehreren Verschlüsselungs-Synchronisations-Frames einem oder mehreren entsprechenden verschlüsselten Sprach-Frames zugeordnet ist, indem der Verschlüsselungs-Synchronisations-Frame in eine vorbestimmte Position in dem Satz von zu sendenden Frames relativ zu dem/den entsprechenden verschlüsselten Sprach-Frame oder Frames platziert wird; und/oder
jeder des einen oder der mehreren Verschlüsselungs-Synchronisations-Frames einem oder mehreren entsprechenden verschlüsselten Sprach-Frames unter Verwendung einer oder mehrerer Sequenznummern zugeordnet ist; und/oder
jeder des einen oder der mehreren Verschlüsselungs-Synchronisations-Frames einem oder mehreren entsprechenden verschlüsselten Sprach-Frames zugeordnet ist, indem der Verschlüsselungs-Synchronisations-Frame mit dem/den entsprechenden verschlüsselten Sprach-Frame oder Frames zu einem einzigen Datenpaket kombiniert wird.

5. Verfahren nach einem der vorstehenden Ansprüche, weiter umfassend:
dass die Systeminfrastruktur einen oder mehrere verschlüsselte Sprach-Frames durch einen entsprechenden Verschlüsselungs-Synchronisations-Frame in einer vorbestimmten Weise ersetzt.

6. Verfahren nach einem der vorstehenden Ansprüche, weiter umfassend, dass die Systeminfrastruktur den Satz von Frames an eine andere Kommunikationsstation sendet.

7. Verfahren nach einem der vorstehenden Ansprüche, wobei die Kommunikationsstation eine Nicht-TETRA-Kommunikationsstation umfasst.

8. Kommunikationssystem, umfassend:
eine Kommunikationsstation und Systeminfrastruktur;
wobei die Kommunikationsstation konfiguriert ist, um:
verschlüsselte Sprach-Frames und einen oder mehrere Verschlüsselungs-Synchronisations-Frames für das Senden zu erzeugen;
jeden des einen oder der mehreren Verschlüsselungs-Synchronisations-Frames einem oder mehreren entsprechenden verschlüsselten Sprach-Frames der verschlüsselten Sprach-Frames zuzuordnen;
an die Systeminfrastruktur einen Satz von Frames zu senden, der die verschlüsselten Sprach-Frames und den einen oder die mehreren zugeordneten Verschlüsselungs-Synchronisations-Frames umfasst; und
an die Systeminfrastruktur Informationen zu senden, die angeben, welcher oder welche der gesendeten verschlüsselten Sprach-Frames von der Systeminfrastruktur durch einen entsprechenden Verschlüsselungs-Synchronisations-Frame des einen oder der mehreren zugeordneten Verschlüsselungs-Synchronisations-Frames ersetzt werden sollte; und
wobei die Systeminfrastruktur konfiguriert ist, um:
den Satz von Frames von der Kommunikationsstation zu empfangen
die Informationen von der Kommunikationsstation zu empfangen;
die Informationen zu verwenden, um zu bestimmen, welcher der verschlüsselten Sprach-Frames durch einen entsprechenden Verschlüsselungs-Synchronisations-Frame des einen oder der mehreren zugeordneten Verschlüsselungs-Synchronisations-Frames ersetzt werden sollte, und einen oder mehrere der verschlüsselten Sprach-Frames durch einen entsprechenden Verschlüsselungs-Synchronisations-Frame des einen oder der mehreren zugeordneten Verschlüsselungs-Synchronisations-Frames zu ersetzen, um einen modifizierten Satz von Frames zu produzieren; und
den modifizierten Satz von Frames an eine oder mehrere TETRA-Kommunikationsstationen zu senden.

9. Kommunikationsstation, umfassend:
Verarbeitungsschaltung, die konfiguriert ist, um verschlüsselte Sprach-Frames und einen oder mehrere Verschlüsselungs-Synchronisations-Frames für das Senden zu erzeugen;
Verarbeitungsschaltung, die konfiguriert ist, um jeden der einen oder mehreren Verschlüsselungs-Synchronisations-Frames einem oder mehreren entsprechenden verschlüsselten Sprach-Frames der verschlüsselten Sprach-Frames zuordnen; und
einen Sender, der konfiguriert ist, um an die Systeminfrastruktur einen Satz von Frames sendet, der die verschlüsselten Sprach-Frames und den einen oder die mehreren zugeordneten Verschlüsselungs-Synchronisations-Frames umfasst;
wobei die Kommunikationsstation konfiguriert ist, um Informationen an die Systeminfrastruktur zu senden, die angeben, welcher oder welche der gesendeten verschlüsselten Sprach-Frames von der Systeminfrastruktur durch einen entsprechenden Verschlüsselungs-Synchronisations-Frame des einen oder der mehreren zugeordneten Verschlüsselungs-Synchronisations-Frames ersetzt werden sollte.

10. Systeminfrastruktur eines Kommunikationssystems, umfassend:
einen Empfänger, der konfiguriert ist, um von einer Kommunikationsstation einen Satz von Frames zu empfangen, der verschlüsselte Sprach-Frames und einen oder mehrere zugeordnete Verschlüsselungs-Synchronisations-Frames umfasst, sowie Informationen, die angeben, welcher oder welche der verschlüsselten Sprach-Frames durch einen entsprechenden Verschlüsselungs-Synchronisations-Frame des einen oder der mehreren zugeordneten Verschlüsselungs-Synchronisations-Frames ersetzt werden sollte;
Verarbeitungsschaltung, die konfiguriert ist, um die Informationen zu verwenden, um zu bestimmen, welcher der verschlüsselten Sprach-Frames durch einen entsprechenden Verschlüsselungs-Synchronisations-Frame des einen oder der mehreren zugehörigen Verschlüsselungs-Synchronisations-Frames ersetzt werden sollte, und um einen oder mehrere der verschlüsselten Sprach-Frames durch einen entsprechenden Verschlüsselungs-Synchronisations-Frame des einen oder der mehreren zugehörigen Verschlüsselungs-Synchronisations-Frames zu ersetzen, um einen modifizierten Satz von Frames zu produzieren; und
einen Sender, der konfiguriert ist, um den modifizierten Satz von Frames an eine oder mehrere TETRA-Kommunikationsstationen zu senden.

11. System oder Station nach einem der Ansprüche 8-10, wobei:
die Kommunikationsstation konfiguriert ist, um jeden des einen oder der mehreren Verschlüsselungs-Synchronisations-Frames einem oder mehreren entsprechenden verschlüsselten Sprach-Frames zuzuordnen, indem sie den Verschlüsselungs-Synchronisations-Frame in eine vorbestimmte Position in dem Satz der zu sendenden Frames relativ zu dem oder den entsprechenden verschlüsselten Sprach-Frames platziert; und/oder
die Kommunikationsstation konfiguriert ist, um jeden der einen oder mehreren Verschlüsselungs-Synchronisations-Frames einem oder mehreren entsprechenden verschlüsselten Sprach-Frames unter Verwendung einer oder mehrerer Sequenznummern zuzuordnen; und/oder
die Kommunikationsstation konfiguriert ist, um jeden des einen oder der mehreren Verschlüsselungs-Synchronisations-Frames einem oder mehreren entsprechenden verschlüsselten Sprach-Frames zuzuordnen, indem sie den Verschlüsselungs-Synchronisations-Frame dem/den entsprechenden verschlüsselten Sprach-Frame oder Frames zu einem einzigen Datenpaket kombiniert.

12. System oder Station nach einem der Ansprüche 8-11, wobei die Systeminfrastruktur konfiguriert ist, um einen oder mehrere verschlüsselte Sprach-Frames durch einen entsprechenden Verschlüsselungs-Synchronisations-Frame in einer vorbestimmten Weise zu ersetzen.

13. System oder Station nach einem der Ansprüche 8-12, wobei die Systeminfrastruktur konfiguriert ist, um den Satz von Frames an eine andere Kommunikationsstation zu senden.

14. System oder Station nach einem der Ansprüche 8-13, wobei die Kommunikationsstation eine Nicht-TETRA-Kommunikationsstation umfasst.

15. Computerprogrammelement, umfassend Computersoftware-Codeabschnitte zum Durchführen eines Verfahrens zum Betreiben einer Kommunikationsstation eines Kommunikationssystems nach Anspruch 2 oder einem der Ansprüche 4 oder 7, wenn abhängig von Anspruch 2, wenn das Programmelement auf einem Datenverarbeitungsmittel ausgeführt wird, oder ein Computerprogrammelement umfassend Computersoftware-Codeabschnitte zum Durchführen eines Verfahrens zum Betreiben einer Systeminfrastruktur eines Kommunikationssystems nach Anspruch 3 oder einem der Ansprüche 4, 5, 6, 7, wenn abhängig von Anspruch 3, wenn das Computerprogrammelement auf einem Datenverarbeitungsmittel ausgeführt wird.

## Revendications

1. Procédé de fonctionnement d'un système de communication comprenant :
une station de communication du système de communication :
générant des trames vocales chiffrées et une ou plusieurs trames de synchronisation de chiffrement pour une transmission ;
associant chacune des une ou plusieurs trames de synchronisation de chiffrement à une ou plusieurs trames vocales chiffrées correspondantes parmi les trames vocales chiffrées ;
transmettant à une infrastructure de système du système de communication un ensemble de trames comprenant les trames vocales chiffrées et les une ou plusieurs trames de synchronisation de chiffrement associées ; et
transmettant à l'infrastructure de système des informations indiquant une ou plusieurs parmi les trames vocales chiffrées transmises qui doivent être remplacées par l'infrastructure de système par une trame de synchronisation de chiffrement correspondante parmi les une ou plusieurs trames de synchronisation de chiffrement associées ; et
l'infrastructure de système du système de communication :
recevant l'ensemble de trames depuis la station de communication ;
recevant les informations depuis la station de communication ;
utilisant les informations pour déterminer les trames vocales chiffrées qui doivent être remplacées par une trame de synchronisation de chiffrement correspondante parmi les une ou plusieurs trames de synchronisation de chiffrement associées, et remplaçant une ou plusieurs parmi les trames vocales chiffrées par une trame de synchronisation de chiffrement correspondante parmi les une ou plusieurs trames de synchronisation de chiffrement associées pour produire un ensemble modifié de trames ; et
transmettant l'ensemble modifié de trames à une ou plusieurs stations de communication TETRA.

2. Procédé de fonctionnement d'une station de communication d'un système de communication, le procédé comprenant la station de communication :
générant des trames vocales chiffrées et une ou plusieurs trames de synchronisation de chiffrement pour une transmission ;
associant chacune des une ou plusieurs trames de synchronisation de chiffrement à une ou plusieurs trames vocales chiffrées correspondantes parmi les trames vocales chiffrées ;
transmettant à une infrastructure de système du système de communication un ensemble de trames comprenant les trames vocales chiffrées et les une ou plusieurs trames de synchronisation de chiffrement associées ; et
transmettant à l'infrastructure de système des informations indiquant une ou plusieurs parmi les trames vocales chiffrées transmises qui doivent être remplacées par l'infrastructure de système par une trame de synchronisation de chiffrement correspondante parmi les une ou plusieurs trames de synchronisation de chiffrement associées.

3. Procédé de fonctionnement d'une infrastructure de système d'un système de communication, le procédé comprenant l'infrastructure de système :
recevant depuis une station de communication un ensemble de trames comprenant des trames vocales chiffrées et une ou plusieurs trames de synchronisation de chiffrement associées ;
recevant depuis la station de communication des informations indiquant une ou plusieurs parmi les trames vocales chiffrées qui doivent être remplacées par une trame de synchronisation de chiffrement correspondante parmi les une ou plusieurs trames de synchronisation de chiffrement associées ;
utilisant les informations pour déterminer les trames vocales chiffrées qui doivent être remplacées par une trame de synchronisation de chiffrement correspondante parmi les une ou plusieurs trames de synchronisation de chiffrement associées, et remplaçant une ou plusieurs parmi les trames vocales chiffrées par une trame de synchronisation de chiffrement correspondante parmi les une ou plusieurs trames de synchronisation de chiffrement associées pour produire un ensemble modifié de trames ; et
transmettant l'ensemble modifié de trames à une ou plusieurs stations de communication TETRA.

4. Procédé selon l'une quelconque des revendications précédentes, dans lequel :
chacune des une ou plusieurs trames de synchronisation de chiffrement est associée à une ou plusieurs trames vocales chiffrées correspondantes par le placement de la trame de synchronisation de chiffrement à une position prédéterminée dans l'ensemble de trames à transmettre par rapport à l'une ou plusieurs trames vocales chiffrées correspondantes ; et/ou
chacune des une ou plusieurs trames de synchronisation de chiffrement est associée à une ou plusieurs trames vocales chiffrées correspondantes en utilisant un ou plusieurs numéros de séquence ; et/ou
chacune des une ou plusieurs trames de synchronisation de chiffrement est associée à une ou plusieurs trames vocales chiffrées correspondantes par la combinaison de la trame de synchronisation de chiffrement avec l'une ou plusieurs trames vocales chiffrées correspondantes dans un paquet de données unique.

5. Procédé selon l'une quelconque des revendications précédentes, comprenant en outre :
l'infrastructure de système remplaçant une ou plusieurs trames vocales chiffrées par une trame de synchronisation de chiffrement correspondante d'une manière prédéterminée.

6. Procédé selon l'une quelconque des revendications précédentes, comprenant en outre l'infrastructure de système transmettant l'ensemble de trames à une autre station de communication.

7. Procédé selon l'une quelconque des revendications précédentes, dans lequel la station de communication comprend une station de communication non-TETRA.

8. Système de communication comprenant :
une station de communication et une infrastructure de système ;
dans lequel la station de communication est configurée pour :
générer des trames vocales chiffrées et une ou plusieurs trames de synchronisation de chiffrement pour une transmission ;
associer chacune des une ou plusieurs trames de synchronisation de chiffrement à une ou plusieurs trames vocales chiffrées correspondantes parmi les trames vocales chiffrées ;
transmettre à l'infrastructure de système un ensemble de trames comprenant les trames vocales chiffrées et les une ou plusieurs trames de synchronisation de chiffrement associées ; et
transmettre à l'infrastructure de système des informations indiquant une ou plusieurs parmi les trames vocales chiffrées transmises qui doivent être remplacées par l'infrastructure de système par une trame de synchronisation de chiffrement correspondante parmi les une ou plusieurs trames de synchronisation de chiffrement associées ; et
dans lequel l'infrastructure de système est configurée pour :
recevoir l'ensemble de trames depuis la station de communication ;
recevoir les informations depuis la station de communication ;
utiliser les informations pour déterminer les trames vocales chiffrées qui doivent être remplacées par une trame de synchronisation de chiffrement correspondante parmi les une ou plusieurs trames de synchronisation de chiffrement associées, et remplacer une ou plusieurs parmi les trames vocales chiffrées par une trame de synchronisation de chiffrement correspondante parmi les une ou plusieurs trames de synchronisation de chiffrement associées pour produire un ensemble modifié de trames ; et
transmettre l'ensemble modifié de trames à une ou plusieurs stations de communication TETRA.

9. Station de communication comprenant :
une circuiterie de traitement configurée pour générer des trames vocales chiffrées et une ou plusieurs trames de synchronisation de chiffrement pour une transmission ;
une circuiterie de traitement configurée pour associer chacune des une ou plusieurs trames de synchronisation de chiffrement à une ou plusieurs trames vocales chiffrées correspondantes parmi les trames vocales chiffrées ; et
un émetteur configuré pour transmettre à l'infrastructure de système un ensemble de trames comprenant les trames vocales chiffrées et les une ou plusieurs trames de synchronisation de chiffrement associées ;
dans lequel la station de communication est configurée pour transmettre à l'infrastructure de système des informations indiquant une ou plusieurs parmi les trames vocales chiffrées transmises qui doivent être remplacées par l'infrastructure de système par une trame de synchronisation de chiffrement correspondante parmi les une ou plusieurs trames de synchronisation de chiffrement associées.

10. Infrastructure de système d'un système de communication comprenant :
un récepteur configuré pour recevoir depuis une station de communication un ensemble de trames comprenant des trames vocales chiffrées et une ou plusieurs trames de synchronisation de chiffrement associées, et des informations indiquant une ou plusieurs parmi les trames vocales chiffrées qui doivent être remplacées par une trame de synchronisation de chiffrement correspondante parmi les une ou plusieurs trames de synchronisation de chiffrement associées ;
une circuiterie de traitement configurée pour utiliser les informations pour déterminer les trames vocales chiffrées qui doivent être remplacées par une trame de synchronisation de chiffrement correspondante parmi les une ou plusieurs trames de synchronisation de chiffrement associées, et remplacer une ou plusieurs parmi les trames vocales chiffrées par une trame de synchronisation de chiffrement correspondante parmi les une ou plusieurs trames de synchronisation de chiffrement associées pour produire un ensemble modifié de trames ; et
un émetteur configuré pour transmettre l'ensemble modifié de trames à une ou plusieurs stations de communication TETRA.

11. Système ou station selon l'une quelconque des revendications 8-10, dans lequel :
la station de communication est configurée pour associer chacune des une ou plusieurs trames de synchronisation de chiffrement à une ou plusieurs trames vocales chiffrées correspondantes par le placement de la trame de synchronisation de chiffrement à une position prédéterminée dans l'ensemble de trames à transmettre par rapport à l'une ou plusieurs trames vocales chiffrées correspondantes ; et/ou
la station de communication est configurée pour associer chacune des une ou plusieurs trames de synchronisation de chiffrement à une ou plusieurs trames vocales chiffrées correspondantes en utilisant un ou plusieurs numéros de séquence ; et/ou
la station de communication est configurée pour associer chacune des une ou plusieurs trames de synchronisation de chiffrement à une ou plusieurs trames vocales chiffrées correspondantes par la combinaison de la trame de synchronisation de chiffrement avec l'une ou plusieurs trames vocales chiffrées correspondantes dans un paquet de données unique.

12. Système ou station selon l'une quelconque des revendications 8-11, dans lequel l'infrastructure de système est configurée pour remplacer une ou plusieurs trames vocales chiffrées par une trame de synchronisation de chiffrement correspondante d'une manière prédéterminée.

13. Système ou station selon l'une quelconque des revendications 8-12, dans lequel l'infrastructure de système est configurée pour transmettre l'ensemble de trames à une autre station de communication.

14. Système ou station selon l'une quelconque des revendications 8-13, dans lequel la station de communication comprend une station de communication non-TETRA.

15. Élément de programme informatique comprenant des parties de code de logiciel informatique pour réaliser un procédé de fonctionnement d'une station de communication d'un système de communication selon la revendication 2, ou l'une quelconque des revendications 4 ou 7 dépendant de la revendication 2, lorsque l'élément de programme est exécuté sur des moyens de traitement de données, ou élément de programme informatique comprenant des parties de code logiciel informatique pour réaliser un procédé de fonctionnement d'une infrastructure de système d'un système de communication selon la revendication 3, ou l'une quelconque des revendications 4, 5, 6, 7 dépendant de la revendication 3, lorsque l'élément de programme informatique est exécuté sur des moyens de traitement de données.
